(19) Europäisches Patentamt / European Patent Office / Office européen des brevets

(11) **EP 1 863 248 B1**

(12) **EUROPEAN PATENT SPECIFICATION**

(45) Date of publication and mention of the grant of the patent:
**04.03.2009 Bulletin 2009/10**

(51) Int Cl.:
*H04L 27/26* (2006.01)    *H04L 25/02* (2006.01)

(21) Application number: **06011426.1**

(22) Date of filing: **01.06.2006**

(54) **Method and apparatus for subchannel allocation**

Verfahren und Vorrichtung zur Zuweisung von Unterträgern

Procédé et dispositif pour l'attribution de sous-canaux

(84) Designated Contracting States:
**DE GB**

(43) Date of publication of application:
**05.12.2007 Bulletin 2007/49**

(73) Proprietor: **NTT DoCoMo Inc.**
**Chiyoda-Ku**
**Tokyo 100-6150 (JP)**

(72) Inventors:
• **Tejera, Pedro**
  **80798 Munich (DE)**
• **Guthy, Christian**
  **85354 Freising (DE)**
• **Utschick, Wolfgang**
  **85051 Ingolstadt (DE)**
• **Nossek, Josef A.**
  **82393 Iffeldorf (DE)**
• **Bauch, Gerhard**
  **80799 Munich (DE)**

(74) Representative: **Schoppe, Fritz et al**
**Patentanwälte**
**Schoppe, Zimmermann, Stöckeler & Zinkler**
**P.O. Box 246**
**82043 Pullach bei München (DE)**

(56) References cited:
• **TEJERA P ET AL: "Sum-rate maximizing decompositon approaches for multiuser MIMO-OFDM" 2005 IEEE 16TH INTERNATIONAL SYMPOSIUM ON PERSONAL, INDOOR AND MOBILE RADIO COMMUNICATIONS (IEEE CAT. NO. 05TH8889) IEEE PISCATAWAY, NJ, USA, vol. 1, 2005, pages 231-235 Vol., XP002403882 ISBN: 978-3-8007-2909-8**

• **P. TEJERA, W.UTSCHICK, G.BAUCH J.A. NOSSEK: "A Novel Decomposition Technique for Multiuser MIMO" IEEE/ITG WORKSHOP ON SMART ANTENNAS, [Online] April 2005 (2005-04), XP002403883 Duisburg Retrieved from the Internet: URL:http://www.nws.ei.tum.de/~pete/publ/TU BN05.pdf> [retrieved on 2006-10-28]**

• **QIAN WANG ET AL: "A grouped and proportional-fair subcarrier allocation scheme for multiuser OFDM systems" 25TH IEEE INTERNATIONAL PERFORMANCE, COMPUTING, AND COMMUNICATIONS CONFERENCE (IEEE CAT. NO.06CH37775C), 10 April 2006 (2006-04-10), - 12 April 2006 (2006-04-12) pages 97-101, XP002403884 IEEE PISCATAWAY, NJ, USA ISBN: 1-4244-0198-4**

• **WONG I C ET AL: "A Low Complexity Algorithm for Proportional Resource Allocation in OFDMA Systems" SIGNAL PROCESSING SYSTEMS, 2004. SIPS 2004. IEEE WORKSHOP ON AUSTIN, TEXAS, USA 13-15 OCT. 2004, PISCATAWAY, NJ, USA,IEEE, 13 October 2004 (2004-10-13), pages 1-6, XP010743926 ISBN: 0-7803-8504-7**

• **JIAN XU ET AL: "Adaptive resource allocation algorithm with fairness for MIMO-OFDMA system" VTC 2006-SPRING. 2006 IEEE 63RD VEHICULAR TECHNOLOGY CONFERENCE (IEEE CAT. NO. 06CH37718) IEEE PISCATAWAY, NJ, USA, 2006, pages 1585-1589, XP002403885 ISBN: 0-7803-9391-0**

- YIN H ET AL: "AN EFFICIENT MULTIUSER LOADING ALGORITHM FOR OFDM-BASED BROADBAND WIRELESS SYSTEMS" GLOBECOM'00. 2000 IEEE GLOBAL TELECOMMUNICATIONS CONFERENCE. SAN FRANCISCO, CA, NOV. 27 - DEC. 1, 2000, IEEE GLOBAL TELECOMMUNICATIONS CONFERENCE, NEW YORK, NY : IEEE, US, vol. VOL. 1 OF 3, 27 November 2000 (2000-11-27), pages 103-107, XP001195543 ISBN: 0-7803-6452-X

- RHEE W ET AL: "INCREASE IN CAPACITY OF MULTIUSER OFDM SYSTEM USING DYNAMIC SUBCHANNEL ALLOCATION" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY : IEEE, US, vol. VOL. 2 OF 3. CONF. 51, 15 May 2000 (2000-05-15), pages 1085-1089, XP000968037 ISBN: 0-7803-5719-1

**Description**

The present invention is in the technical field of communications and especially in the field of point to multipoint communication system.

In a point to multipoint communication system, as for instance the downlink of a mobile communication system, the transmitter has the important task of assigning resources such as time, frequency and space components to the receivers under its coverage. If the transmitter does not have any channel knowledge, different time or frequency slots are assigned to every user so as to avoid multiuser interference. However, if the transmitter knows the channels of each user, multiple users can be served at the same time and over the same frequency multiplexing them in space. In this context, we consider a point to multipoint system with K users, each receiving information from the channel over $r_k$ outputs or antennas, a transmitter, sending information to the channel over t inputs or antennas, and N subcarriers corresponding to a orthogonal frequency division multiplexing (OFDM) transmission scheme. Considering the N subcarriers, a composite channel can be defined as,

$$\mathbf{H} = \begin{bmatrix} \mathbf{H}_1 & \cdots & \mathbf{H}_N \end{bmatrix} \in C^{r_1+\ldots+r_K \times tN} . \qquad (1.1)$$

For a particular frequency n the corresponding multiuser channel is given by,

$$\mathbf{H}_n = \begin{bmatrix} \mathbf{H}_{1,n}^T & \cdots & \mathbf{H}_{K,n}^T \end{bmatrix} \in C^{r_1+\ldots+r_K \times t} . \qquad (1.2)$$

where $\mathbf{H}_{k,n}$ is the matrix corresponding to user k on the n-th subcarrier.

To such a system the cooperative zero-forcing with successive encoding and successive allocation method (CZF-SESAM) can be applied in order to allocate space and frequency dimensions to the different users (see for example P. Tejera, W. Utschick, G. Bauch, and J. A. Nossek. A Novel Decomposition Technique for Multiuser MIMO. In Workshop on Smart Antennas, Duisburg, Apr. 2005). So far performance of the CZF-SESAM algorithm (see for example P. Tejera, W. Utschick, and J. A. Nossek. MIMO OFDM Transmission Strategies for 4G Communication System. 4th Technical Report of the Research Cooperation: Adaptive Antenna Concepts for 4G Wireless Communication, TUM and DoCoMo Euro-Labs, September 2004) has been investigated mainly based on a sum rate criterion. Correspondingly, at each step and on each subcarrier the algorithm selects the spatial dimension with largest channel gain and over the set of resulting subchannels a waterfilling power loading is applied. As a result an operating point for the downlink is obtained which nearly achieves the sum capacity of the system, which in this case (Gaussian broadcast channel) has been shown to reach the so called Sato bound (see for example S. Vishwanath, N. Jindal, and A. J. Goldsmith. Duality, Achievable Rates, and Sum-Rate Capacity of Gaussian MIMO Bradcast Channel. IEEE Trans. on Information Theory, Vol. 49: 2658-2668, Oct. 2003). While this point is certainly interesting it does not consider rate requirements that users in the cell might have.

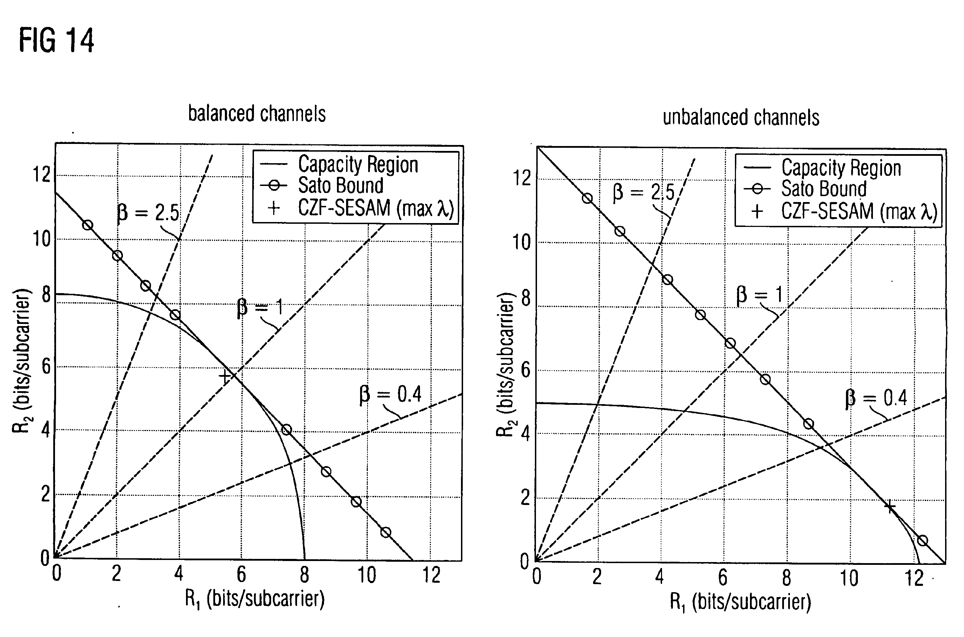

Due to the limited transmit power, not all rate requirements requested by the users can be satisfied if reliable transmission is wished. The set of rates at which the base station can reliably transmit information to the users in the cell determines the capacity region. As rate tuples beyond this region are not reachable it makes sense to define user requirements in terms of ratios between rates obtained by the different users or the relative share that a user gets out of the total transmission rate. To be more precise, if $R_k$ is the rate obtained by user k and R is the total transmitted rate user requirements can be given as a T vector of relative rates ρ = [ρ₁ ... , ρ_K]^T, where $\rho_k = R_k/R$. Henceforth we will call quality of service (QoS) constraints to the user requirements defined in this way. The goal is to maximize the total transmission rate under such a QoS constraint. In other words, the goal consists of approaching the capacity region over the straight line defined by the QoS constraints. This is illustrated in Fig. 14. There the capacity region of a downlink with two users and N =16 carriers is plotted for the cases of balanced and unbalanced channels. It can be observed that the sum rate maximizing allocation obtained from the CZF-SESAM algorithm provides an operational point which practically touches the Sato bound. QoS constraints are represented by dashed lines departing from the origin and defined by the ratio β =$R_2/R_1$. In this example, the operating point delivered by CZF-SESAM in the case of balanced channels is close to the constraint β =1 but far from the other two constraints, which may be more convenient if users utilize applications with different rate requirements. In the case of unbalanced channels we observe that user 1 gets almost all the rate. In this case it might be convenient to trade off rate of user 1 for rate of user 2 in order to satisfy, for instance, a balanced rate requirement derived from the application layer.

Additionally, in the case a first and second user have predefined minimum transmission rate requirements each, it could be possible that an assignation of subchannels to the first (respectively to the second) user is suboptimal and it might also be possible allocating more transmission capacity to one of the users when the other user still does not reach or go below the predefined minimum transmission rate requirement. Therefore, it might be possible that a fixed constellation of transmission capacity being allocated to the first and the second user is optimal in the economic sense but also a slight deviation can be realized such that one user gains additional transmission capacity while the other user still does not reach the lower minimum transmission rate constraint.

In "Qian Wang et al: "A grouped and proportional-fair subcarrier allocation scheme for multiuser OFDM systems" 25th IEEE International Performance, Computing and Communications Conference (IEEE Cat. No. 06CH37775C), 10 April 2006 (2006-04-10), - 12 April 2006 (2006-04-12) pages 97-101, XP002403884 IEEE Piscataway, NJ, USA ISBN: 1-4244-0198-4", the authors propose a new and rather simple grouped-subcarrier allocation algorithm with a proportional-fairness among users in a downlink OFDM transmission. The proposed algorithm tries to minimize the required transmit power while satisfying the rate requirement and BER constraint of its user. The subcarrier and power location are performed in two steps. The authors mainly focus on the subcarrier allocation step. First subcarriers are grouped to reduce the computational complexity of the allocation algorithm. They then employ proportional constraints in terms of rate ratios to assume each user to achieve the target data rate in advance. Simulation results show that this low complexity resource allocation scheme achieves better performance than the fixed frequency division approach and shows comparable performance compared to previously derived suboptimal resource distribution schemes. It is also shown that with rate constraints, the capacity is distributed more fairly and rationally among users.

In "Wong I.C. et al: "A low Complexity Algorithm for Proportional Resource Allocation in OFDMA Systems", Signal Processing Systems, 2004, SIPS 2004, IEEE Workshop in Austin, Texas, USA 13-15 Oct. 2004, Piscataway, NJ, USA, IEEE, 13 October 2004 (2004-10-13), pages 1-6, XP010743926 ISBN: 0-7803-8504-7", OFDMA basestations allow multiple users to transmit simultaneously on different subcarriers during the same symbol period. This article considers basestation allocation of subcarriers and power to each user to maximize the sum of user data rates, subject to constraints on total power, bit error rate and proportionality among user data rates. Previous allocation methods have been iterative non-linear methods suitable for offline optimization. In the special high subchannel SNR case, an iterative route-finding method has linear time-complexity in the number of users and NlogN complexity in the number of subchannels. The non-iterative method as proposed is made possible by a relaxation of strict user rate proportionality constraints. Compared to the root-finding method, the proposed method waives the restriction of high subchannel SNR, has significantly lower complexity and in simulation, yields higher user data rates.

In "Jian Xu, et al: "Adaptive resource allocation algorithm with fairness for MIMO-OFDMA system" VTC 2006-SPRING, 2006 IEEE 63RD Vehicular Technology Conference (IEEE Cat. No. 06CH37718) IEEE Piscataway, NJ, USA, 2006, pages 1585-1589, XP002403885 ISBM: 0-7803-9391-0", subcarrier and power allocation problems are investigated of MIMO-OFDMA systems in order to maximize the total system capacity subject to total power and proportional rate constraints of each user. A resource allocation algorithm is proposed to determine the number of subcarriers for each user and their assignment. Simulation results show that the proposed resource allocation algorithm can make the capacity be distributed more fairly, very close to the ideal rate constraints among users than the scheme which maximizes the system capacity only.

In "Yin, H. et al.: "An Efficient Multiuser Loading Algorithm for OFDM-Based Broadband Wireless Systems", GLOBECOM'00. 2000 IEEE Global Telecommunications Conference, San Francisco, CA, Nov. 27 - Dec. 1, 2000, IEEE Global Telecommunications Conference, New York, NY: IEEE, US, Vol. 1 of 3, 27 November 2000 (2000-11-27), pages 103-107, XP001195543 ISBN: 0-7803-6452-X", the authors present a novel-loading algorithm for OFDM-based multiuser communications systems to maximize the total system throughput while satisfying the total power and user rate constraints. The new scheme determines the subcarrier, bit and power allocation by decoupling an NP-hard combinatorial problem into two steps, of which the first step is resource allocation, i.e. how much power and how many subcarriers for each user are used, based on users average channel gains and their rate requirements and the second step is subcarrier assignment and bit loading based on users' channel profiles across all subcarriers.

In "Rhee W. et al.: "Increase in Capacity of Multiuser OFDM System Using Dynamic Subchannel Allocation" VTC 2000-SPRING. 2000 IEEE 51st. Vehicular Technology Conference Proceedings, Tokyo, Japan, May 15-18, 2000, IEEE Vehicular Technology Conference, New York, NY: IEEE, US Vol. 2 of 3. Conf. 51, 15 May 2000 (2000-05-15), pages 1085-1089, XP000968037 ISBN: 0-7803-5719-1", the problem of dynamic multiuser subchannel allocation in a downlink of an OFDM system is investigated. The assumptions are that the channel model is quasi-static and that the basestation has perfect channel information. In traditional TDMA or FDMA systems, resource allocation for each user is non-adaptively fixed and the water-filling power spectrum is known to be optimal. Since the subchannel allocations among the users are not optimized, a group of users is likely to suffer from poor channel gains resulting from large path loss and random fading. To resolve this problem, a multiuser convex optimization problem is derived to find the optimal allocation of subchannels and a low complexity adaptive subchannel allocation algorithm is proposed. Simulation results show that the proposed algorithm performs almost as well as the optimal solution. Higher spectral efficiency is also achieved for a larger number of users in a cell due to the multiuser diversity.

Therefore, it is the object of the present invention to provide an approach for a more flexible rate allocation to a first and a second user.

This object is achieved by a sub channel allocation apparatus according to claim 1, and a method for sub channel allocation according to claim 22.

The present invention provides a subchannel allocation apparatus being configured for allocating subchannels of a communication channel not being assigned for transmission in a multicarrier multiple-input-multiple-output transmitter to a first user and to a second user, a subcarrier block having at least one subchannel for the first user and one subchannel for the second user, each subchannel having assigned a singular value, the first user being initially assigned a first ratio of the transmission capacity of the communication channel and the second user being initially assigned a second ratio of the transmission capacity of the communication channel, the subchannel allocation apparatus comprising:

a selector being configured for selecting on each subcarrier block a singular value for the first user and a singular value for the second user;

a spectral allocator being configured for determining a first capacity the first user can achieve in the communication channel using the selected singular values for the first user and for determining a second capacity the second user can achieve in the communication channel using the selected singular values for the second user, wherein the spectral allocator is further configured for using the first and the second capacities and the first and second ratios to determine a first spectral portion of the spectrum of the communication channel to be used for transmission to the first user and a second spectral portion of the communication channel to be used for transmission to the second user; and

a determiner being configured for using the first and second spectral portions and the singular values for the first and second user for determining the individual subchannels to be allocated for transmission to the first user and for determining the individual subchannels to be allocated for transmission to the second user.

Embodiments may comprise a subchannel reallocation unit having a subcarrier allocation scheme for allocating a first group of subcarrier blocks of a communication channel to the first user and for allocating a second group of subcarrier blocks of the communication channel to the second user, the first user having a first minimum transmission rate and the second user having a second minimum transmission rate, the subchannel allocation apparatus further comprising:

a classifier being configured for deriving an indication variable for the second user from an optimisation problem, the optimisation problem being directed to maximize the transmission capacity through the communication channel and being based on the first and second minimum transmission rate, the indication variable having a first range of values indicating that, if a value of the indication variable is in the first range of values, an increase of the transmission rate of the second user is operative for decreasing the transmission capacity through the communication channel and the indication variable having a second range of values indicating that, if a value of the indication variable is in the second range of values, an increase of the transmission rate of the second user is operative for increasing or keeping constant the transmission capacity of the communication channel, wherein the classifier is configured for classifying the second user into a first classification group, if the indication variable is in the first range of values or for classifying the second into a second classification group, if the indication variable is in the second range of values; and

an allocator being configured for reducing the number of subcarrier blocks of the second group of subcarrier blocks and for increasing the number of subcarrier blocks of the first group of subcarrier blocks in the case the second user is classified into the first classification group.

Additionally, the present invention discloses a method for subchannel allocation for allocating subchannels of a communication channel not being assigned for transmission in a multicarrier multiple-input-multiple-output transmitter to a first user and to a second user, a subcarrier block having at least one subchannel for the first user and one subchannel for the second user, each subchannel having assigned a singular value, the first user being initially assigned a first ratio of the transmission capacity of the communication channel and the second user being initially assigned a second ratio of the transmission capacity of the communication channel, the method of subchannel allocation comprising the steps of:

selecting on each subcarrier block a singular value for the first user and a singular value for the second user;

determining a first capacity the first user can achieve in the communication channel using the selected singular values for the first user and for determining a second capacity the second user can achieve in the communication channel using the selected singular values for the second user, wherein the spectral allocator is further configured for using the first and the second capacities and the first and second ratios to determine a first spectral portion of the spectrum of the communication channel to be used for transmission to the first user and a second spectral portion of the communication channel to be used for transmission to the second user; and

using the first and second spectral portions and the singular values for the first and second user for determining the individual subchannels to be allocated for transmission to the first user and for determining the individual subchannels to be allocated for transmission to the second user.

Finally, a method for subchannel reallocation is disclosed having a subcarrier allocation scheme for allocating a first group of subcarrier blocks of a communication channel to the first user and for allocating a second group of subcarrier blocks of the communication channel to the second user, the first user having a first minimum transmission rate and the second user having a second minimum transmission rate, the method for subchannel reallocation further comprising the steps of:

deriving an indication variable for the second user (466) from an optimisation problem, the optimisation problem being directed to maximize the transmission capacity through the communication channel and being based on the first and second minimum transmission rate, the indication variable having a first range of values indicating that, if a value of the indication variable is in the first range of values, an increase of the transmission rate of the second user is operative for decreasing the transmission capacity through the communication channel and the indication variable having a second range of values indicating that, if a value of the indication variable is in the second range of values, an increase of the transmission rate of the second user is operative for increasing or keeping constant the transmission capacity of the communication channel;

classifying the second user into a first classification group, if the indication variable is in the first range of values or for classifying the second user into a second

classification group, if the indication variable is in the second range of values; and

reducing the number of subcarrier blocks of the second group of subcarrier blocks and for increasing the number of subcarrier blocks of the first group of subcarrier blocks in the case the second user is classified into the first classification group.

The present invention is based on the finding that a consideration of the first and second ratios for the determination of the subchannels opens the possibility to exactly determine the transmission capacity to be allocated to the first user compared to the transmission capacity to be allocated to the second user. Thus, a network operator is not bound to the rates being allocated to the first and the second user according to the conventional CZF-SESAM algorithm (which especially for unbalanced channels provides a highly unfair allocation of transmission capacities for the first and the second users). In order to provide a more adequate allocation of resources to the first and second user, in a first step a singular value for each subcarrier block for the first user is selected and a singular value on each subcarrier block is selected for the second user. In this context, a subcarrier block can be a group of several subcarriers of a multicarrier system or the subcarrier block can also consist only of a single subcarrier. In the case that the subcarrier block comprises more than one subcarrier of the multicarrier system, the subcarriers in the subcarrier block should preferably have constant channel characteristic as for example constant flat fading in the subcarrier block. Thus, on each subcarrier block one singular value is selected for the first user and a further singular value is selected for the second user. In this context, the singular values can for example identify dimensions in the multiple-input-multiple-output transmitter such that by the above-mentioned selection one singular value on each subcarrier (corresponding to one subchannel on each subcarrier) is assigned to the first user and one singular value on each subcarrier (corresponding to one subchannel on each subcarrier) is assigned to the second user.

Following, in a next step, it is determined from the selected singular values which capacity can be achieved by the first and second user using the subchannels selected in the preceding step. After having determined the achievable first and second capacities for the first and second users, a first (respectively second) spectral portion of the spectrum of the communication channel is determined in order to assign the first and second users. Thus, a share of the available bandwidth provided by the multicarrier system is allocated on each user for the transmission to the first or second user. Expressed in other words, the first and second spectral portions denote a number of subchannel blocks (or subchannels) which are assigned for transmission (or reception) for the first and second users. Due to the fact that the first and second capacities as well as the first and second ratios are considered for determining the first and second spectral portions, it can be made sure that the predefined requirement for rates to be assigned to the first, respectively second, users are realized.

Furthermore, in a last step, the location of individual subchannels for use by the first or second users is to be determined in order to correct a possible mismatch of subchannels assigned to the frist user and the subchannels assigned to a second user. To be more specific, it has to be checked whether the number of subchannels allocated to a first user ensures that the first spectral portion is obtained and whether the number of subchannels being allocated to the second user ensures whether the second spectral portion can be realized. If one of the users is allocated, more subchannels than it should be assigned according to the respective spectral portion, a re-allocation is performed, for example by reallocating a subchannel being previously allocated to the first user to the second user.

Therefore, it can be made sure that not the optimal rates for the first and the second user (determined according to the conventional CZF-SESAM algorithm) are realized but also a QoS (quality-of-service) constraint can be realized, wherein the QoS constraint can be seen in the transmission rates being provided to the first, respectively second user.

Additionally, it is also possible to improve flexibility in the case the first user has a minimum transmission rate constraint, and the second user has a second minimum transmission rate constraint. In this situation it is possible that the rate being allocated to the first user can be increased, wherein the rate being provided to the second user still is not below the second minimum transmission rate constraint. Then it is possible to provide the first user with a larger rate such that, for example, a fast data throughput can be achieved by the first user. The change of the rates being allocated to the first and the second users requires then a reallocation of subcarrier blocks or subcarrier blocks of the first or second group of subcarrier blocks or subcarriers such that the physical resources for transmission for the first and the second users are adapted. This adaptation can be performed on the basis of a classification in which users are grouped in a group of "losers" and other users are grouped in a group of "winners". The reallocation process then includes that subcarriers being previously allocated to users of the group of "losers" are assigned to users of the group of "winners". This approach of reallocating subcarriers of users of a group of losers to subcarriers of users of the group of winners can be performed on the basis of an optimization problem in order to adequately consider the first and second minimum transmission rates of the first and the second users. Then, no users obtain a transmission rate below the respective minimum transmission rate. Especially in the case when the optimization problem is formulated as a Lagrange optimization problem, the classification becomes very easy by just considering a certain Lagrange multiplier, especially by considering a sign of the above-mentioned Lagrange multiplier.

Preferred embodiments of the present invention are described below with reference to the following Figures, in which

Fig. 1      discloses a sequence of steps to be performed in order to carry out a CZF-SESAM algorithm comprising the inventive approach;

Fig. 2      discloses diagrams for balanced and unbalanced channels indicating an achievability region of the CZF-SESAM algorithm;

Fig. 3      discloses further diagrams for balanced and unbalanced channels in which achievability regions are shown which are determined by a sub-optimum approach;

Fig. 4A     discloses a block diagram of an embodiment of the inventive subchannel allocation apparatus;

Fig. 4B     discloses a block diagram of an a subchannel re-allocation apparatus;

Fig. 5      discloses diagrams for balanced and unbalanced channels, in which determined spectral shares are shown;

Fig. 6      discloses diagrams for balanced and unbalanced channels showing achievable rates for the first and second users when using the CZF-SESAM algorithm with QoS constraints;

Fig. 7      discloses diagrams for uncorrelated and correlated channels, in which average results for balanced channels are shown;

Fig. 8      discloses diagrams for uncorrelated and correlated channels, in which average results for unbalanced channels are shown;

Fig. 9      discloses a diagram indicating a capacity region for two users, in which a combination of rates for the first and second users fulfilling certain requirements lies far apart from the point of maximum sum capacity;

Fig. 10A    discloses a flow chart of a

Fig. 10B    discloses schematically the effect of the method for subchannel reallocation;

Fig. 11    discloses a diagram showing results obtained by the CZF-SESAM algorithm with equal minimum rate constraint;

Fig. 12    discloses a diagram showing results obtained by performing an unfavourable example of the CZF-SESAM algorithm with minimum rate constraints;

Fig. 13    discloses a diagram showing transmission rates of CZF-SESAM algorithm with minimum rate constraints after applying an embodiment of the present invention; and

Fig. 14    discloses diagrams for balanced and unbalanced channels showing the achievable sum capacity, the capacity region and quality of service constraints.

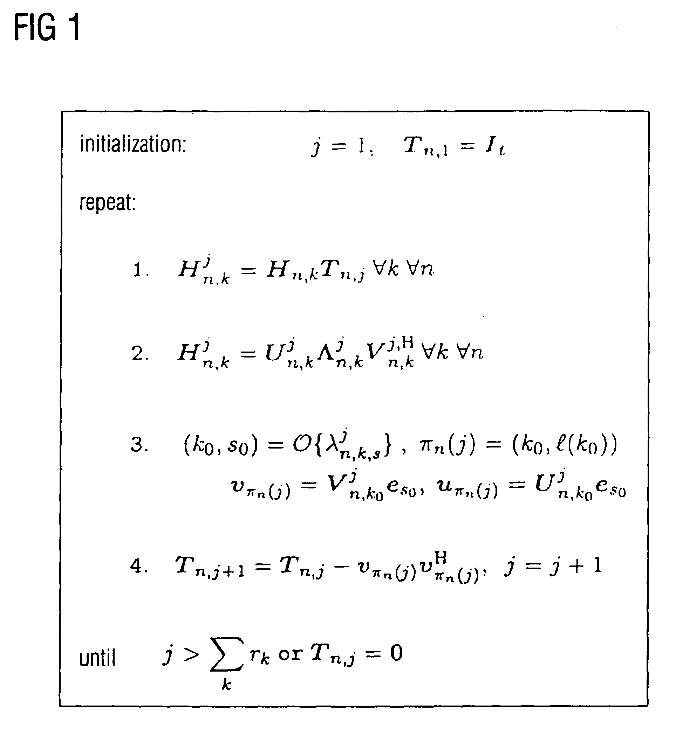

The CZF-SESAM algorithm decomposes the broadcast channel in a set of virtually decoupled scalar channels by selecting at each step a new subchannel belonging to a certain user. The procedure is recalled in Fig. 1. Thereby, $\mathbf{H}_k$ denotes the channel matrix of user k, $\mathbf{T}_j$ is the projector into the remaining subspace at iteration or layer j, $\lambda_{k,s}^j$ is the s-th singular value of the k-th user at layer j and $\mathbf{e}_s$ is the s-th column of the identity matrix. The algorithm applies in an identical way to all subcarriers of the OFDM system, which is the reason for the non inclusion of subcarrier index. If the rule O is chosen so that at each iteration j the subchannel with largest gain is selected, i.e.

$$O\{\cdot\} = \arg_{k,s} \arg\max_{k,s}\{\cdot\},$$

the sum capacity of the system can almost be reached. For any generic selection rule O an achievability region can be characterized, which is obtained by considering all possible ways of performing power loading over the set of resulting subchannels.

Generalized waterfilling

Assume that for a given selection rule O the following allocation of space and frequency components is obtained,

$$\text{user } 1 \rightarrow \{\lambda_{1,1}, \ldots, \lambda_{1,n_1}\},$$

$$\text{user } 2 \rightarrow \{\lambda_{2,1}, \ldots, \lambda_{2,n_2}\},$$

$$\vdots$$

$$\text{user } K \rightarrow \{\lambda_{K,1}, \ldots, \lambda_{K,n_K}\},$$

where $\lambda_{k,l}$ represents the gain of the lth subchannel assigned to user k. Let $p_{k,l}$ denote the power allocated to the subchannel with gain $\lambda_{k,l}$. Only those power allocations are feasible that satisfy the transmit power constraint,

$$\sum_{k=1}^{K} \sum_{l=1}^{n_k} p_{k,l} \leq P_{Tx}. \qquad (1.3)$$

Given a power allocation the rate achieved by any user k can be computed as

$$R_k = \sum_{l=1}^{n_k} \log\left(1 + p_{k,l}\lambda_{k,l}^2\right),$$

where on all subchannels Gaussian noise is assumed to be identically distributed with unit variance. Hence, for any power allocation a tuple of achievable rates can be defined as $\mathbf{R} = [R_1, \ldots, R_K]^T$. In turn, the achievability region $R_o$ associated to a rule O can be defined as the set of rate tuples that can be achieved by considering all feasible power allocations. Due to convexity of this region, in order to ascertain the boundary points, i.e. the Pareto optimal points, a weighting method can be employed (see for example L. A. Zadeh, "Optimality and Non-Scalar-Valued Performance Criteria", IEEE Transactions on Automatic Control, AC-8(1):59-60, 1963). According to this method each point on the boundary of the region is associated to a tuple of weights $\mu = [\mu_l, \cdots, \mu_K]^T$ such that $\mu_1 + \ldots + \mu_K = 1$. The point itself and the power loading that achieves that point can be obtained by solving the following optimization problem,

$$\max_{p_{k,\ell}, \forall k,\ell} \mu^T R \quad \text{s. t.} \sum_{k=1}^{K}\sum_{\ell=1}^{n_k} p_{k,\ell} \leq P_{\text{Tx}}.$$

The result falls into the category of generalized waterfilling solutions (D. Perez Palomar and J. Rodriguez Fonollosa, "Practical Algorithms for a Family of Waterfilling Solutions", IEEE Transactions on Signal Processing, 53: 686-695, 2005) and reads

$$p_{k,l} = \max\left\{0, \left(\mu_k\eta - \frac{1}{\lambda_{k,\ell}^2}\right)\right\},$$

where $\eta$ is chosen to satisfy the transmit power constraint 1.3.

Achievability Region

The achievability region of CZF-SESAM can be obtained by applying the union operator to the set of achievability regions $R_o$, which results from considering all possible selection rules, and building the convex hull of the resulting set,

$$\mathcal{R}^{\text{CZF-SESAM}} = \text{Co}\left\{\bigcup_o \mathcal{R}_o\right\}.$$

$$(1.4)$$

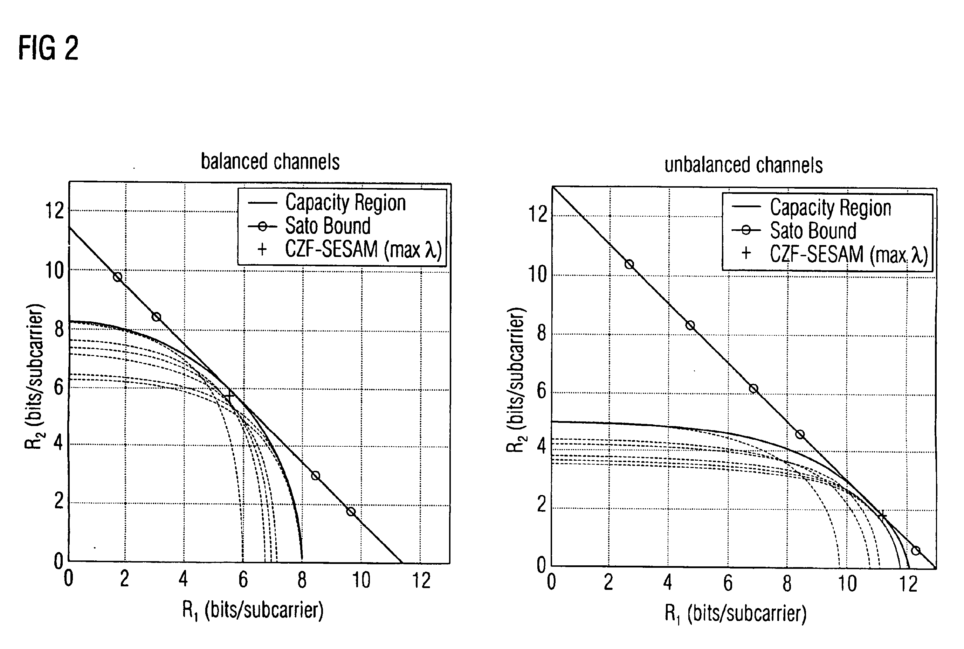

In Fig. 2 dotted lines have been used to represent a number of partial regions $R_o$ which correspond to some purposefully selected subchannel allocations. It can be observed that for these examples the convex hull of the union of the plotted achievability regions, which is included in the actual CZF-SESAM achievability region, would be almost as large as the actual capacity region. Computation of the actual CZF-SESAM achievability region $R^{\text{CZF-SESAM}}$ is in this case computationally very expensive. Indeed, these examples correspond to a system with four antennas at the transmitter and two antennas at each of the two receivers. The number of different spatial allocations on a subcarrier of such a system amounts to 14. If, as in these examples, we consider 16 subcarriers a number of different allocations is obtained equal to $14^{16} \approx 2 \times 10^{18}$. Note that this number of distinct allocations of frequency-space components can be viewed as the number of distinct selection rules that might be stated. As a result we may conclude that the computation of $R^{\text{CZF-SESAM}}$ as defined in 1.4 is in practical terms almost impossible even for systems of a moderate size.

A suboptimum method to approximate the boundary of the achievability region of CZF-SESAM is presented in (see for example J. Brehmer, A. Molin, P. Tejera and W. Utschick, "Low Complexity Approximation of the MIMO Broadcast Channel Capacity Region", submitted to ICC'06, Istanbul, 2006). There for a given weighting vector $\mu$ the selection rule is chosen to be

$$\mathcal{O}\{\lambda_{k,s}^{j}\} = \arg \max_{k,s}\{\mu_k \lambda_{k,s}^{j}\};$$

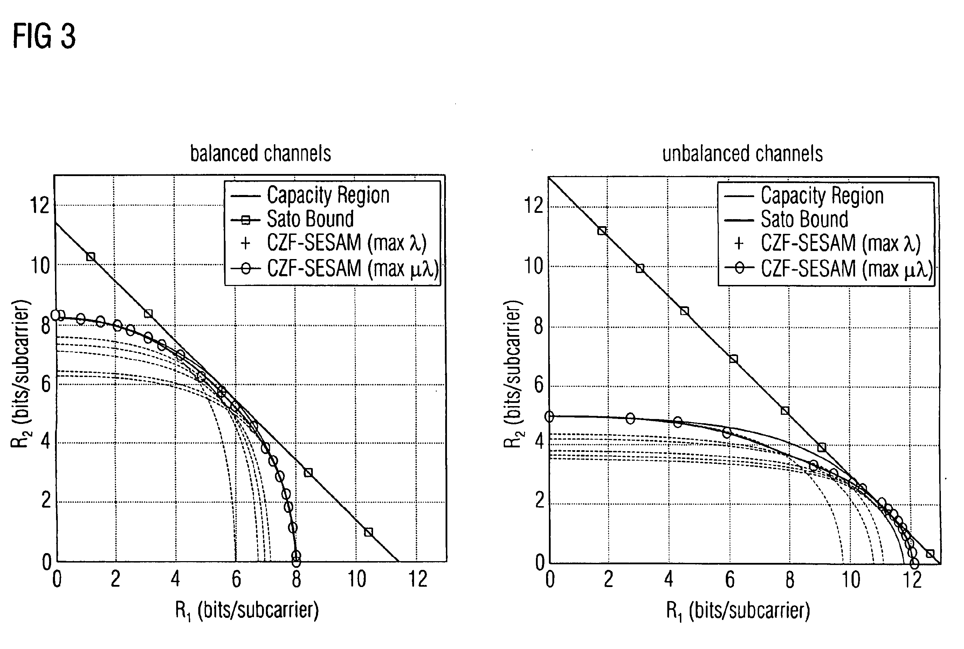

and on the set of resulting subchannels a generalized waterfilling distribution of power is applied. A set of points is obtained, each corresponding to a choice of $\mu$. Over this set of points a convex hull operator can be applied, which yields a good approximation of the actual $R^{CZF\text{-}SESAM}$. For our two examples results of this method are shown in Fig. 3.

Suboptimality can be noticed in the unbalanced case where at least one of the partial regions clearly extends out of the area comprised by the line with circles. Nevertheless in both examples the difference between the capacity region and the suboptimum achievability region of CZF-SESAM is observed to be really slight.

For a certain QoS constraint, $\rho = [\rho l, \cdots, \rho_K]^T$, a good operational point could be found by searching over the set of feasible weighting vectors $\mu$. The most important disadvantage of this approach is that it requires several executions of the CZF-SESAM algorithm in order to evaluate compliance of the resulting rates with the desired QoS constraint. Furthermore, complexity of the search seems to be highly dependent on the number of users involved. Finally, the existence of a solution is not guaranteed as in general there are operational points that do not correspond to the choice of any weighting vector but that are only reachable by time-sharing.

New solution and advantage

Rather than investigating the details of searching an appropriate weighting vector $\mu$, here we propose a procedure to incorporate QoS constraints into the execution of CZF-SESAM. The result is an allocation of subchannels that is consistent with the given QoS constraint. Perfect compliance with this constraint is achieved by taking it into account in the subsequent power loading optimization problem.

The present invention consists of a mechanism to incorporate QoS constraints into the execution of CZF-SESAM. More precisely a procedure is presented to adapt the selection rule **O** to any given QoS constraint.

The main advantages of the inventive approach are,

- an execution of CZF-SESAM is enough to obtain an allocation of resources consistent with the given QoS constraint,

- solutions are always found without resorting to time-sharing strategies,

- complexity does not essentially depend on the number of users.

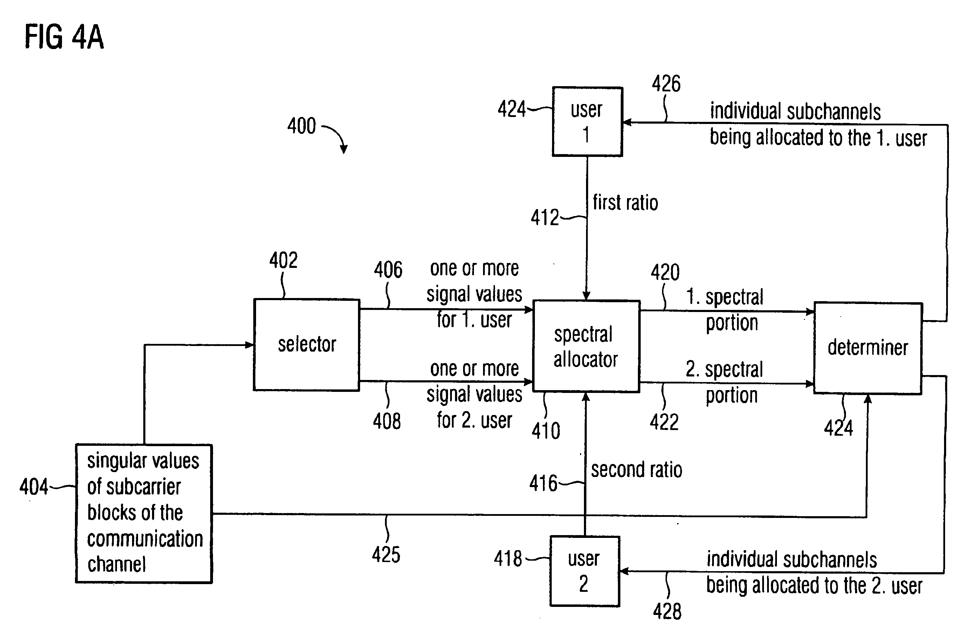

In the following, a preferred embodiment for the inventive subchannel allocation apparatus is described in more detail referring to Fig. 4A. The subchannel allocation apparatus 400 comprises a selector 402 being configured for receiving singular values of subcarrier blocks of the communication channel 404 which are pre-calculated in a previous step. The selector 402 is configured for providing singular values 406 for the first user and singular values 408 for the second user. Furthermore, the subchannel allocation apparatus 400 comprises a spectral allocator 410 being configured for receiving the singular values 406 for the first user and the singular values 408 for the second user. Furthermore, the spectral locator 410 is configured for receiving a first ratio 412 from a first user 414 and for receiving a second ratio 416 from a second user 418. The spectral allocator 410 is configured for providing a first spectral portion 420 and a second spectral portion 422 to a determiner 424. The determiner 424 is configured for receiving the first spectral portion 420 and the second spectral portion 422 from the spectral locator 410. The determiner 424 is configured for allocating 426 individual subchannels to the first user and for allocating 428 individual subchannels to the second user.

Firstly, the selector 402 is preferably configured for selecting on each subcarrier block (or subcarrier) of the multicarrier system a singular value for the first user and a singular value for the second user. Herein, the singular values are provided to the selector 402 such that the selector has to apply a distinct selection rule in order to select the respective value for the respective users. Preferably, the selector is configured for selecting on each subcarrier block (or subcarrier) the largest singular value for the first user and the largest singular value for the second user such that for a user on a subcarrier having more than one subchannel the highest singular value is selected for the subcarrier and the user. Thus, the selector provides to the spectral allocator 410 a set of singular values for the first user, in which the number of singular values preferably correspond to the number of subcarriers of the multicarrier system. Analogously, the selector 402 also provides a set of singular values for the second user, wherein the number of singular values selected for the second user preferably also correspond to the number of subcarriers of the multicarrier system.

The spectral allocator 410 is configured for determining a first capacity the first user can achieve in the communication channel, whereby the selected singular values for the first user are used for calculating the first capacity. Analogously, the selector 410 is also configured for calculating a second capacity the second user can achieve in the communication channel, whereby for the calculation of the second capacity, the selected singular values for the second user are used. Furthermore, the spectral allocator 410 is further configured for determining a first spectral portion 420 of the spectrum of the communication channel, wherein for this calculation the first and second capacities as well as first and second ratios are used. The first ratio 412 indicates how much transmission capacity should be allocated to the first user, wherein the second ratio 416 indicates how much transmission capacity shall be allocated to the second user 418. Also, the spectral allocator 410 is further configured for analogously determining a second spectral portion 422 of the spectrum of the communication channel to be used for transmission to the second user, wherein also the singular values 406 for the first user, the singular values 408 for the second user, the first ratio 412 and the second ratio 416 are used for this calculation.

Furthermore, the determiner 424 is configured for using the spectral portions and the singular values 425 which are pre-calculated for the first and second users for determining the individual subchannels 426 to be allocated for transmission to the first user 414 and for determining the individual subchannels 428 to be allocated for transmission to the second user 418. Especially the functionality of the determiner 424 is explained later in more detail.

Analogously, the above-explained subchannel allocation apparatus 400 can also be configured for alocation of individual subchannels to further users (for example a third, fourth, ... users) such that the structure disclosed in Fig. 4A can be generalized without loss of generality, which is explained later.

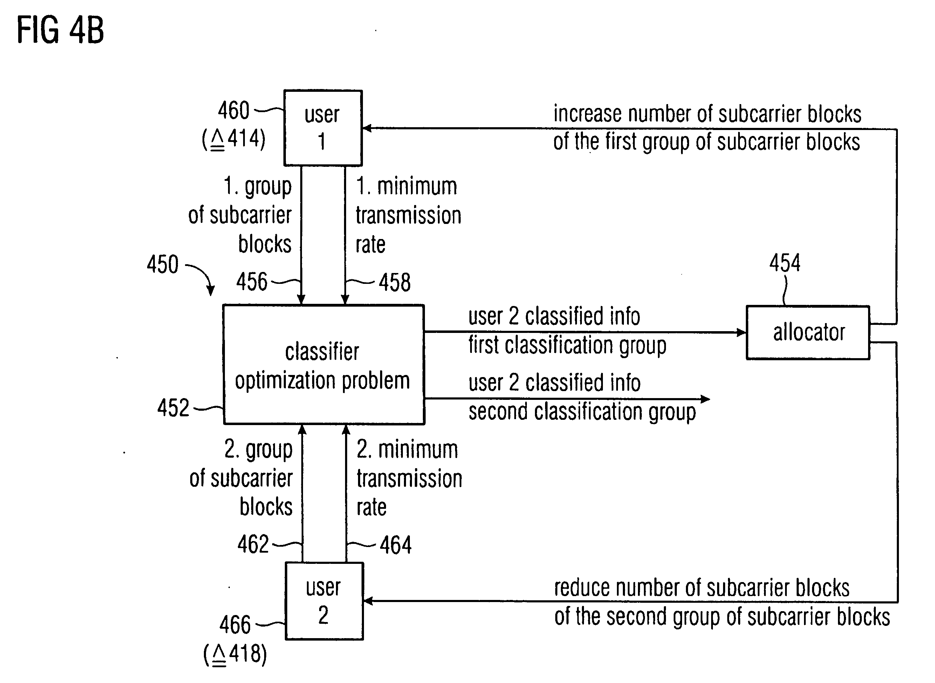

Fig. 4B discloses a subchannel re-allocation apparatus 450 having a classifier 452 and an locator 454. The classifier 452 is provided with a first group of a subcarrier block 456 and a first minimum transmission rate 458 of a first user 460. The first group of subcarrier blocks 456 denotes the subcarrier blocks (or single subcarriers) which are assigned for transmission (or reception) of the first user, whereas the first minimum transmission rate 458 denotes a minimal transmission rate the first user 460 has to be provided with, such that the first user 460 can perform a requested service with a predefined QoS constraint. Analogously, the classifier 452 is provided with a second group of subcarrier blocks 462 and a second minimum transmission rate 464 of a second user 466, wherein the second group of subcarrier blocks comprises the subcarrier block (or a subcarrier) which are assigned for transmission (or reception) of the second user 466. Analogously to the first minimum transmission rate 458 the second minimum transmission rate 464 indicates a minimal transmission rate or capacity the second user 466 has to be provided with in order to enable the second user 466 to perform a requested service with a predefined QoS.

Based on the information provided about the first user 460 and the second user 466, the classifier 452 is operative to classify the second user into a first or a second classification group. In this classification the first user is preferably used as a reference user. A classification of the second user into the first classification group is performed for the case, a further increase of transmission capacity allocated to the second user would result in a decrease of the total transmission capacity through the communication channel, wherein a classification of the second user into the second classification group is performed in the case an increase of the transmission capacity allocated to the second user would result in an increase of the total transmission capacity through communication channel.

Further, the allocator 454 is configured for increasing the number of subcarrier blocks of the first group of subcarriers and for reducing the number of subcarrier blocks of the second group of subcarrier blocks in the case that the second user is classified into the first classification group. Expressed in other words, a re-allocation of a subcarrier from the second user to the first user is performed by the allocator 454 in the case that the classifier is classified into the first classification group (that is in the case an increase of subcarrier blocks to the second user would result in a decrease of the total channel capacity of the channel). In this reallocation procedure it is still considered that in the channel only a limited number of subchannels can be allocated to the first or the second users 460 or 466, respectively. As a main aspect, the approach uses said classification into the first or second classification group of the second user. This classification of the users into groups in contrast to a consideration of users alone provides the advantage that not only individual users are considered for the reallocation task but a whole group of users is considered wherein it is possible to analyse the effects of the reallocation of the users in the first classification group on the other users in the first classification group. Thus, it is possible to choose one distinct user from the first classification group from which the deduction of subcarriers or subchannels has the smallest influence on the total transmission capacity of the communication channel. Contrary hereto, a consideration of all users (that is when no classification is done) for the reallocation task would result in a large overhead of computation. Thus, the pre-evaluation of users which have the highest chance of providing an improvement of channel capacity when subchannels or subcarriers are subtracted from them provides a significant improvement in computational complexity.

Further, it is also possible to classify additional users (for example a third, fourth, ... etc. user) into the first or second classification group. In this situation, the further users are analogously classified, that is, if a further increase of transmission capacity allocated to the respective user will decrease the total transmission capacity of the communication channel, the classification into the first classification group is performed. Analogously, the classification of the further user into the second classification group is performed if an increase of transmission capacity to the respective further user will result in an increase of the total transmission capacity of the communication channel.

The classification of the users or further users into said classification groups can be seen as an aspect of Fig. 4B. In order to perform this classification, the classifier 452 is configured for deriving an indication variable for the second (or further) user(s) from an optimization problem. This optimization problem should be formulated such as to maximize the transmission capacity through the communication channel. Furthermore, the first or second minimum transmission rate for the first or second users shall be formulated as an additional restriction in order to make sure that each user is allocated at least the respected predefined minimum transmission rate for said user. In the case that more than two users are classified by the classifier, it is also possible to consider further minimum transmission rate restrictions for the further users such that each user is allocated at least the respective minimum transmission rate. Preferably, the first and second minimum transmission rate is considered in the way of a transmission rate ratio being determined by dividing the second minimum transmission rate by the first minimum transmission rate. Using such an approach, the first user is considered to be a reference user, wherein the second user is classified with respect to said reference user. In the case that more than one user is classified, one of the users to be considered is analogously chosen as reference user, whereas the other users are classified with respect to the reference user. However, as it is shown in more detail later, it is also possible to directly perform a classification for the reference user without solving the optimization problem more than one time, i.e. by considering a further user as reference user in a further solution of the optimisation problem. Thus, solving the optimization problem just one time is enough in order to classify all users.

Additionally, the classifier 450 is preferably configured to determine an indication variable which is, for example, a Lagrange multiplier if the optimization problem is formulated as a Lagrange function. In this situation it is now very simple to perform the classification of a user into the first or second classification group as, for example, only the sign of the respective indication variable (that is, preferably, the respective Lagrange multiplier) is used for the classification. Such an approach enables a very simple classification of the user in the respective classification group. Additionally, it is also possible to consider further constraints like, for example, power constraints for respective users or subcarriers such that the optimization problem becomes very flexible for considering the relevant parameters. A further detailed description of the subchannel re-allocation apparatus is given below in more detail.

Now, a more detailed description of the first preferred embodiment of the present invention, namely the subchannel allocation apparatus and a respective method for subchannel allocation is explained in more detail.

Incorporation of QoS constraints into CZF-SESAM uniquely affects step 3 of the algorithm disclosed in Fig. 1, i.e. the selection rule O. Aiming at the allocation of the j-th spatial component on every subcarrier, the first and second steps of the algorithms are independently executed on all frequency dimensions. Let $\mathbf{\Lambda}_{k,c}^{j}$ be the matrix of eigenvalues or, more generally the matrix of singular values of user k, on subcarrier c, in the j-th iteration k, c (layer) of the algorithm, and $\lambda_{k,c,s}^{j}$ the s-th eigenvalue of this matrix. In the following a procedure is described to assign subchannels to users in a particular iteration or layer, e.g. j-th in this case, taking into account a given QoS constraint. The preferred procedure consists of three basic steps.

1. Selection of largest singular values

First, for each user, the largest singular value on each subcarrier is selected, i.e.

$$\lambda_{k,c}^{j} = \max_{s}\{\lambda_{k,c,s}^{j}\}, \quad \forall k, c.$$

This restriction to the largest singular values is in general suboptimum, however, it significantly simplifies matters.

2. Determination of spectral shares

Second, the number of frequency components is determined that shall be assigned to each user taking into account a given QoS constraint.

To this end, first, capacity is computed that each user could achieve in this layer should all frequency components be assigned to that user. As an example, capacity of user k at layer j is computed as,

$$C_k^j = \frac{1}{C} \sum_{c=1}^{C} \log(1 + p_{k,c} \lambda_{k,c}^{j,2}).$$

where C is the number of subcarriers and $p_{k,c}$ is obtained from a waterfilling distribution over the singular values $\lambda_{k,c}^{j}$. Thereby, at layer j, the following power constraint is assumed to apply,

$$\sum_{c=1}^{C} p_{k,c} \leq P_{\mathrm{Tx}}/j \quad \forall k.$$

(1.5)

Obviously, this expression in an artifact that permits computation of capacity in a particular layer without considering subchannels assigned in previous layers or those to be assigned in subsequent layers.

Now, we consider the plane defined by the following tuples of rates,

$$R_1 = [\ C_1^j \quad 0 \quad \cdots \quad 0]^T,$$

$$R_2 = [\ 0 \quad C_2^j \quad \cdots \quad 0]^T,$$

$$\vdots$$

$$R_K = [\ 0 \quad 0 \quad \cdots \quad C_K^j\ ]^T,$$

and compute the intersection point of this plane and the straight line defined by the given QoS constraint $\rho = [\rho_1, \cdots, \rho_k]^T$. The equation of the plane is given by

$$y = \alpha_1 R_1 + \alpha_2 R_2 + \ldots + \alpha_K R_K \quad \text{with} \quad \sum_{k=1}^{K} \alpha_k = 1,$$

and that of the straight line by,

$$y = \eta \boldsymbol{\rho}.$$

The intersection point is obtained solving the following linear system of equations

$$\eta \rho = \alpha_1 R_1 + \alpha_2 R_2 + \ldots + \alpha_K R_K$$
$$1 = \alpha_1 + \alpha_2 + \ldots + \alpha_K.$$

The resulting weight $\alpha_k$ is interpreted as the fraction of subcarriers that should be allocated to user k at layer j to comply with QoS constraint $\rho$. It can be shown that this procedure and interpretation of the parameters $\alpha_k$ is optimum

if there is only one layer, i.e. Eqn. 1.5 is a real constraint, the channels are non frequency selective, and the same amount of power is allocated on every subcarrier. Only in such a case the boundary of the capacity region is a plane and the intersection of this plane with the QoS constraint is the optimum operational point. Even though in all other cases this method is suboptimal, it shall be seen that it delivers excellent results.

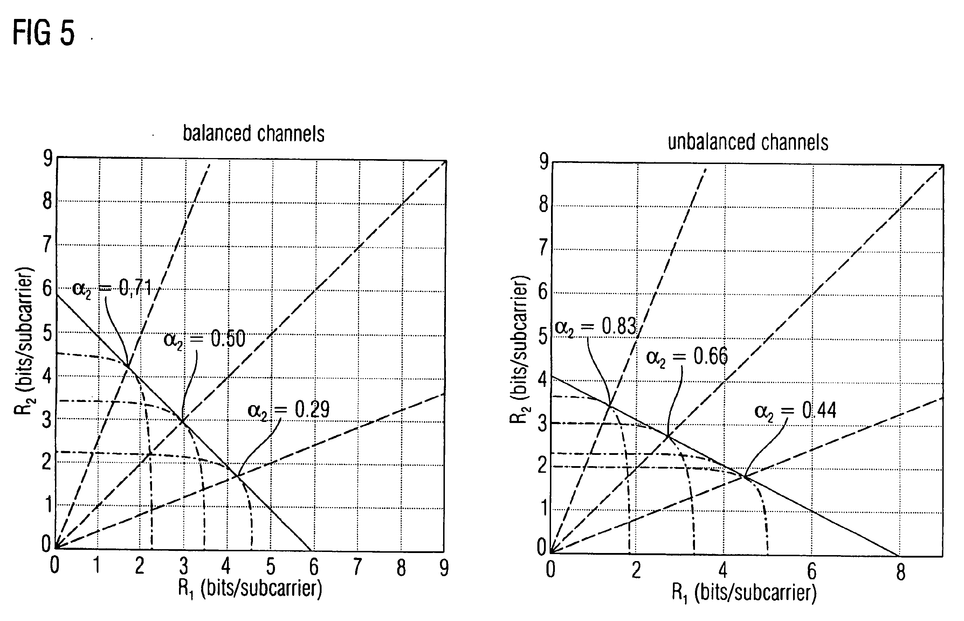

In Fig. 5 this procedure is illustrated for the first layer, i.e. j =1 of the examples given in previous sections. The black solid line represents the plane defined by the single user capacities. The dashed lines represent three different QoS constraints. Computation of the intersection points between black solid and grey lines yields a parameter $\alpha_2$ that indicates the portion of subcarriers to be assigned to user 2. The portion of subcarriers to be assigned to user 1 is given by $\alpha_1 = 1 - \alpha_2$. In the case of balanced channels a balanced QoS constraint demanding the same rate for both users results in a equal number of subcarriers for both users. However, in case of unbalanced channels a balanced QoS constraint results in user 2 being assigned 66% of the subcarriers to compensate for the larger subchannel gains of user 1. The dash-dotted lines indicate the capacity regions that would be obtained if the spectra of the users were flat by considering all possible power allocations. We observe that these regions hardly extend out of the region delimited by the black solid line, which shows that suboptimality incurred by the underlying assumption of uniform power distribution is certainly small. Note that in case of flat spectra the power allocation at the intersection of the dashed and black solid lines is uniform.

Once values $\alpha_k$ are computed, the absolute number of subcarriers to be assigned to user k is given by $\gamma_k = \alpha_k \cdot C$. As fractional numbers of subcarriers do not seem adequate for practical implementation the following algorithm can be used to convert fractional to natural subcarrier numbers.

First, round the fractional subcarrier numbers to natural numbers,

$$\tilde{\gamma}_k = \mathrm{round}(\gamma_k),$$

then, compute the difference between number of subcarriers and number of assigned subchannels,

$$m = C - \sum_{k=1}^{K} \tilde{\gamma}_k.$$

If m = 0 stop execution. If m > 0, i.e. there are more subcarriers than assigned dimensions, assign one more subchannel to the m users with smallest $\tilde{\gamma}_k - \gamma_k$. If m < 0, i.e. there are less subcarriers than assigned dimensions, remove one subchannel from the -musers with largest $\tilde{\gamma}_k - \gamma_k$.

3. Effective subchannel allocation

Proceeding as described in the previous section we are able to find how many subcarriers should be assigned at a certain layer to each user. In this section a procedure is described to find out which particular subcarriers should be assigned at a certain layer to each user.

To this end, first, on each subcarrier the subchannel is selected with largest gain, i.e.

$$\lambda_c^j = \max_k \left\{ \lambda_{k,c}^j \right\}. \quad \forall c$$

(1.6)

This selection is optimum with respect to sum capacity but it might not be in agreement with the numbers of subcarriers computed in the previous section. If this is the case the selection must be modified in order to match these numbers. This can be done as follows.

Let $c_k$ be the number of subchannels of user k selected according to Eqn. 1.6 and define the following sets:

The set of users to which additional subchannels should be assigned,

$$R = \{k \,|\, \tilde{\gamma}_k - c_k > 0\},$$

the set of users from which subchannels should be removed,

$$D = \{k \,|\, \tilde{\gamma}_k - c_k < 0\},$$

the set of subcarriers on which subchannel selection could be modified, i.e. subcarriers on which a user of set D has been assigned a subchannel,

$$\mathcal{C} = \left\{ c \,|\, \lambda_c^j = \lambda_{k,c}^j \wedge k \in \mathcal{D} \right\},$$

and, finally, a set with the differences between gains of selected subchannels and gains of nonselected subchannels,

$$\mathcal{S} = \left\{ \delta_{k,c} \,|\, k \in \mathcal{R} \wedge c \in \mathcal{C} \right\},$$

where

$$\delta_{k,c} = \lambda_c^j - \lambda_{k,c}^j.$$

With these definitions the following procedure is repeated until the sets D and R are empty, i.e. until the number of subcarriers assigned to each user coincides with the number $\tilde{\gamma}_k$ computed in the previous section.
Find the user of set R and carrier of set C corresponding to the smallest gain difference with respect to a selected subchannel,

$$(k_0, c^*) = \min_{k,c} \arg \left\{ \delta_{k,c} \right\}, \delta_{k,c} \in \mathcal{S}.$$

Find the user to which initially the subchannel on subcarrier $c_0$ has been assigned,

$$k_1 = \max_k \arg \{ \lambda_{k,c^*}^j \}.$$

Change the assignment on the selected subcarrier,

$$\lambda_{c^*}^j = \lambda_{k_0,c^*}^j.$$

Update subchannel counters and redefine sets accordingly,

$$c_{k_1} = c_{k_1} - 1, \quad c_{k_0} = c_{k_0} + 1.$$

Though suboptimal, this procedure yields a good performance and has a clear rationale. It departs from the sum capacity optimum subchannel selection and modifies at each step the allocation so that the incurred channel gain loss is minimized.

Once allocation at iteration or layer j has been completed, projectors are updated on each subcarrier (see step 4 in Fig. 1) and the allocation procedure begins for layer j+1.

4. Waterfilling with QoS constraint

Once the allocation process has been carried out in all iterations or layers of the CZF-SESAM algorithm a set of scalar subchannels is obtained over which power loading can be applied. In this section the power loading is derived that maximizes sum capacity under consideration of a given QoS constraint.

Assume that after applying the CZF-SESAM algorithm in the way described in previous sections the following allocation results,

$$\text{user } 1 \rightarrow \{\lambda_{1,1}, \ldots, \lambda_{1,n_1}\},$$

$$\text{user } 2 \rightarrow \{\lambda_{2,1}, \ldots, \lambda_{2,n_2}\},$$

$$\vdots$$

$$\text{user } K \rightarrow \{\lambda_{K,1}, \ldots, \lambda_{K,n_K}\},$$

where $\lambda_{k,l}$ represents the gain of the lth subchannel assigned to user k. The optimization problem to be solved in order to find the power loading that maximizes sum rate sub-ject to a QoS constraint $\rho = [\rho_1, \cdots, \rho_K]^T$ can be stated as follows,

$$\text{maximize} \quad \frac{1}{\rho_1} \sum_{\ell=1}^{n_1} \log(1 + p_{1,\ell} \lambda_{1,\ell}^2)$$

$$\text{subject to} \quad p_{k,\ell} \geq 0, \; \forall k, \ell$$

$$P_{\text{Tx}} - \sum_{k=1}^{K} \sum_{\ell=1}^{n_k} p_{k,\ell} \geq 0$$

$$\frac{1}{\rho_k} \sum_{\ell=1}^{n_k} \log(1 + p_{k,\ell} \lambda_{k,\ell}^2) - \frac{1}{\rho_1} \sum_{\ell=1}^{n_1} \log(1 + p_{1,\ell} \lambda_{1,\ell}^2) = 0, \; \forall k > 1$$

The Lagrangian of this optimization problem can be written as

$$\mathcal{L}(p_{k,\ell}, \eta, \mu_{k,\ell}, \nu_k) = \quad (1.7)$$

$$= \sum_{k=1}^{K} \frac{\nu_k}{\rho_k} \sum_{\ell}^{n_k} \log(1 + p_{k,\ell} \lambda_{k,\ell}^2) + \eta \left( P_{\text{Tx}} - \sum_{k=1}^{K} \sum_{\ell=1}^{n_k} p_{k,\ell} \right) + \sum_{k=1}^{K} \sum_{\ell=1}^{n_k} \mu_{k,\ell} p_{k,\ell},$$

where $\nu_1 = 1 - \sum_{k=1}^{K} \nu_k$. The corresponding Karush-Kuhn-Tucker (KKT) conditions read (see S. Body and L.

Vandenberghe, "Convex Optimization", Cambridge University Press, 2004)

$$\frac{\nu_k}{\rho_k}\frac{\lambda_{k,\ell}^2}{1+p_{k,\ell}\lambda_{k,\ell}^2} - \eta + \mu_{k,\ell} = 0, \ \forall k, \qquad (1.8)$$

$$\frac{1}{\rho_k}\sum_{\ell=1}^{n_k}\log(1+p_{k,\ell}\lambda_{k,\ell}^2) - \frac{1}{\rho_1}\sum_{\ell=1}^{n_1}\log(1+p_{1,\ell}\lambda_{1,\ell}^2) = 0, \ \forall k > 1, \qquad (1.9)$$

$$P_{\mathrm{Tx}} - \sum_{k=1}^{K}\sum_{\ell=1}^{n_k}p_{k,\ell} \geq 0, \quad p_{k,\ell} \geq 0, \ \forall k, \ell, \quad \eta \geq 0, \quad \mu_{k,\ell} = 0, \ \forall k, \ell, \qquad (1.10)$$

$$\eta\left(P_{\mathrm{Tx}} - \sum_{k=1}^{K}\sum_{\ell=1}^{n_k}p_{k,\ell}\right) = 0, \quad \mu_{k,\ell}p_{k,\ell} = 0, \ \forall k, \ell.$$

Considering $p_{k,l} \geq 0$, $\mu_{k,l}p_{k,l} = 0$ and Eqn. 1.8 we can write

$$p_{k,l} = \max\left\{0, \left(\xi_k - \frac{1}{\lambda_{k,l}^2}\right)\right\}, \quad \forall k, l$$

where $\xi_k = \nu_k/\rho_k\eta$. This result has the form of a waterfilling solution with a user dependent water level $\xi_k$. These levels must be chosen so that the K - 1 equalities in 1.9 hold and the power constraint in 1.10 is satisfied with equality. A bisection procedure can be used to determine these parameters in the following way.

First, the water level of a user is arbitrarily chosen, e.g. $\xi_1$. From this parameter, all other parameters $\xi_k$ can be computed making use of equations 1.9. The total power is subsequently computed using Eqns. 1.11. If the resulting total power is smaller than the available transmit power $P_{\mathrm{Tx}}$ the level $\xi_1$ is increased. Otherwise the level $\xi_1$ is decreased. These computations are repeated until the required power is approximately equal to the available power.

Simulation Results

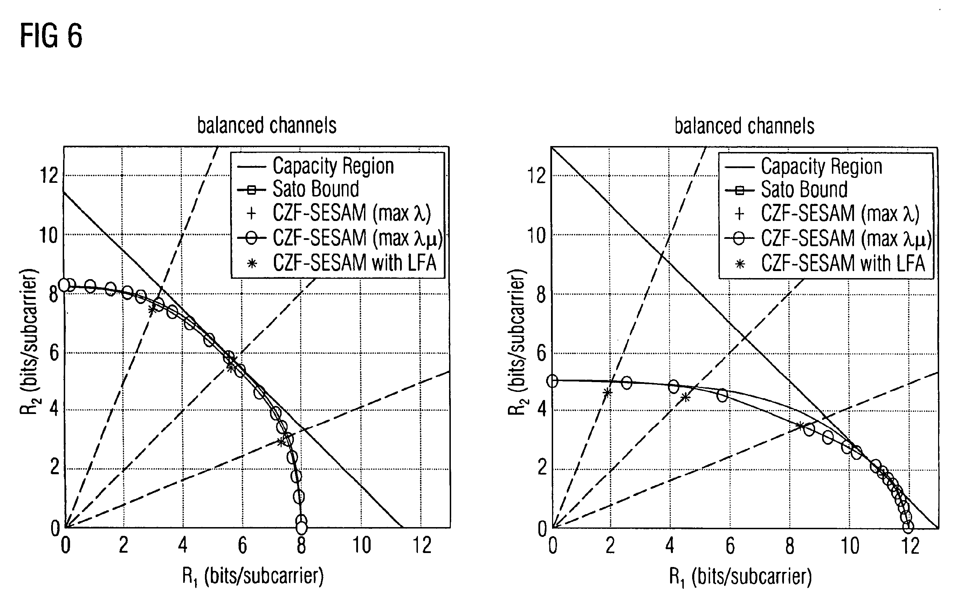

For the example used along this document the operating points delivered by the CZF-SESAM algorithm with layered frequency allocation (LFA) are shown in Fig. 6. It shall be recalled that here a system is considered with 16 subcarriers, 4 antennas at the transmitter and 2 antennas at each of the two receivers. The signal to noise ratio, defined as the ratio between the transmit power and the noise variance at each receive antenna, is equal to 10 dB. We observe that in all cases the operating point delivered by CZF-SESAM with LFA almost reaches the boundary of the suboptimum CZF-SESAM achievability region. The losses with respect to the capacity region are also very small. Note that the practical relevance of the algorithm resides in the fact that the delivered operational points exactly fulfill any given QoS constraint and this is achieved with a single execution of the CZF-SESAM algorithm.

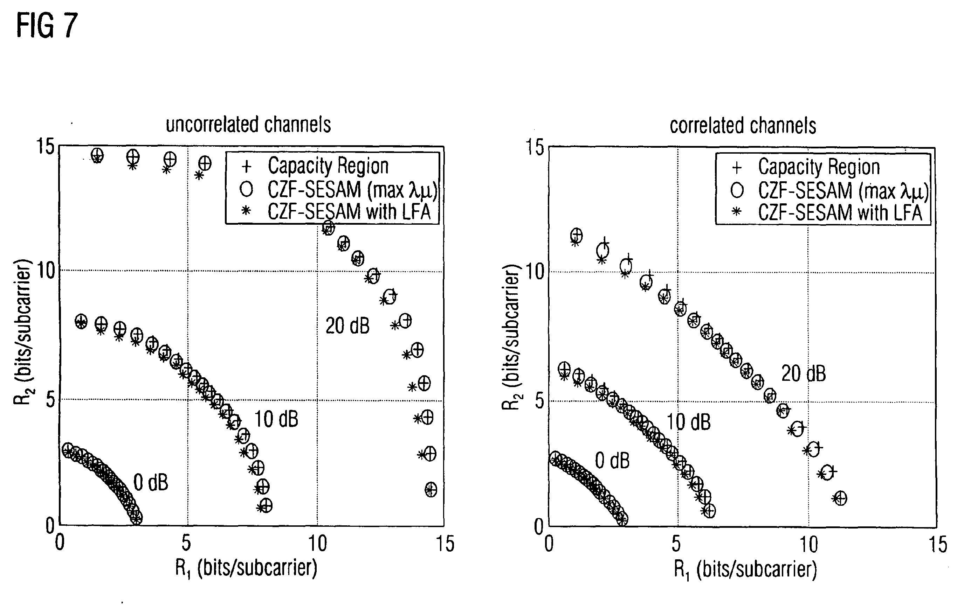

In order to avoid being misled by particular examples, average results over a number of different channel realizations are required. To this end, simulations have been carried out of a system with 16 subcarriers, two users with 2 antennas each and a transmitter with 4 antennas. Entries of channel matrices on different subcarriers have been assumed to be independently and identically distributed according to a zero-mean complex-valued Gaussian distribution. Fig. 7 shows average results for balanced channels. Thereby, the entries of the channel matrices of both users are assumed to have unit variance. QoS constraints have been considered such that $R_1/R_2 = 0.1 \times n$ and $R_2/R_1 = 0.1 \times n$ with $1 \leq n \leq 10, n \in \mathbf{N}$. Points corresponding to the capacity region and those corresponding of the suboptimum CZF-SESAM region have been computed by averaging intersection points between every QoS constraint and the boundaries of these regions for each particular channel realization. Both for the case of spatially uncorrelated channels, i.e. the entries of channel matrices on any subcarrier are independently distributed, and spatially correlated channels and for all three values of SNR, CZF-SESAM with LFA delivers operational points which almost overlap with those corresponding to the suboptimum CZF-SESAM region and the capacity region itself. For the case of correlated channels the eigenvalue profile of the transmit correlation matrices of both users $\mathbf{R_{Tx}} = E\left\{\mathbf{H}_{k,c}^{H}\mathbf{H}_{k,c}\right\}$ has been chosen to be

$$\boldsymbol{\lambda} = 2 \cdot [3.65 \ 0.34 \ 0.01 \ 0].$$

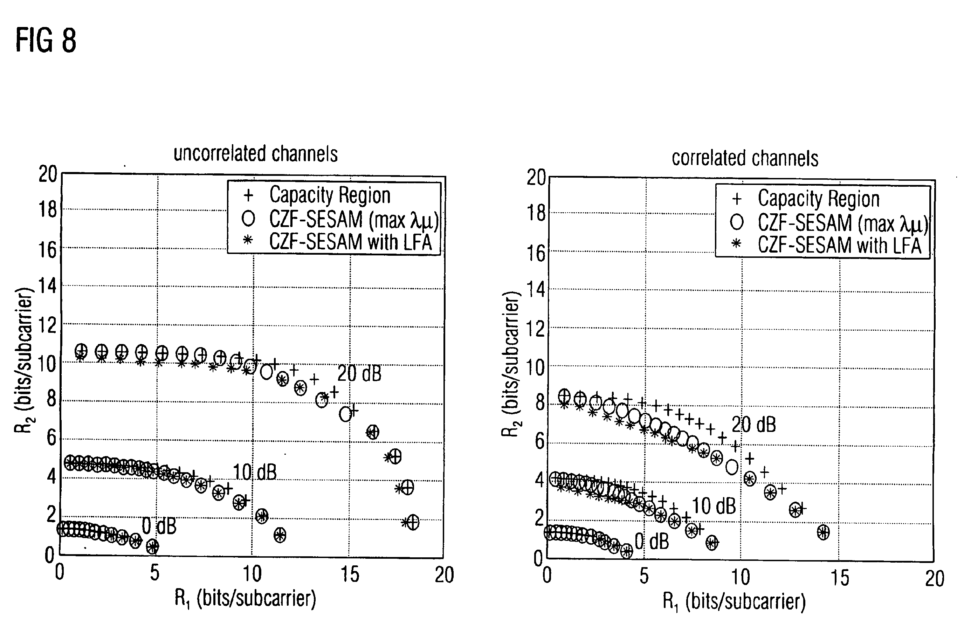

Fig. 8 shows results for the case of unbalanced channels. Thereby, the variance of the entries of the channel matrices of user 1 has been increased to 4 and the variance of the entries of the channel matrices of user 2 has been decreased to 1/4. We observe that for uncorrelated channels the results provided by CZF-SESAM with LFA are very close to those corresponding to the suboptimum CZF-SESAM and the theoretical capacity region. For correlated channels, points delivered by CZF-SESAM with LFA almost overlap with those corresponding to the suboptimum CZF-SESAM region but a visible gap is observed between these points and those corresponding to the capacity region. This might be the price to be paid for the zero-forcing feature of CZF-SESAM.

Summarizing the first embodiment of the present invention, it has to be mentioned that this approach presents a mechanism for incorporating QoS constraints imposed by higher layers into the allocation of resources preferably performed in a multiuser multicarrier MIMO system. Quality of service constraints are given as fractions of rates that each user should obtain out of the resulting sum rate. Allocation of spatial and frequency dimensions is carried out according to the cooperative zero-forcing with successive encoding and successive method (CZF-SESAM) which is, for example, previously mentioned in the international application WO 2006/048037. The procedure described in the present patent application basically constitutes a means of performing allocation, taking into account prescribed quality of service constraint. Furthermore, the present approach can also be performed iteratively such that in each iteration a portion of unused subchannels is allocated to users in order to fulfil the prescribed quality of service constraints. Preferably, the presented procedure consists of three steps: After all potential beam forming vectors have been computed on each subcarrier (at a certain iteration), first preferably for each user, only the beam-forming vector is on each subcarrier selected that yields the highest channel gain. Nevertheless, it is also possible to use another beam-forming vectors. In the second step, considering subchannels selected in the first step, capacity values are computed for every user and based on these capacity values and the quality of service constraints, the spectral share of each user is computed. Finally, the particular assignation of space-frequency dimensions is carried out by departing from the sum rate optimum allocation and modifying this initial allocation according to a minimum energy loss principle, in order to comply with the spectral share as computed in the second step. The mechanism proposed in the present patent application, is primarily interesting for network operators as it allows to steer allocation performed by the CZF-SESAM according to criteria other than sum rate which, as it is well known, could lead to systematic disregard of users with poor channels.

Concerning advantages or the economical effect of the presented first embodiment of the present invention, it has to be mentioned that this approach opens the possibility to chose operational points which present an acceptable trade-off between the value of data transmitted in the downlink and satisfaction of every user in the cell. Multiuser MIMO allows to serve more users in a cell without additional spectrum requirements or alternatively allows to provide better quality of service to the users. The proposed inventive approach according to the first embodiment introduces fairness and, therefore improves the user's satisfaction.

Now, reference is made to Fig. 4B in more detail.

Extension to minimum rate constraints

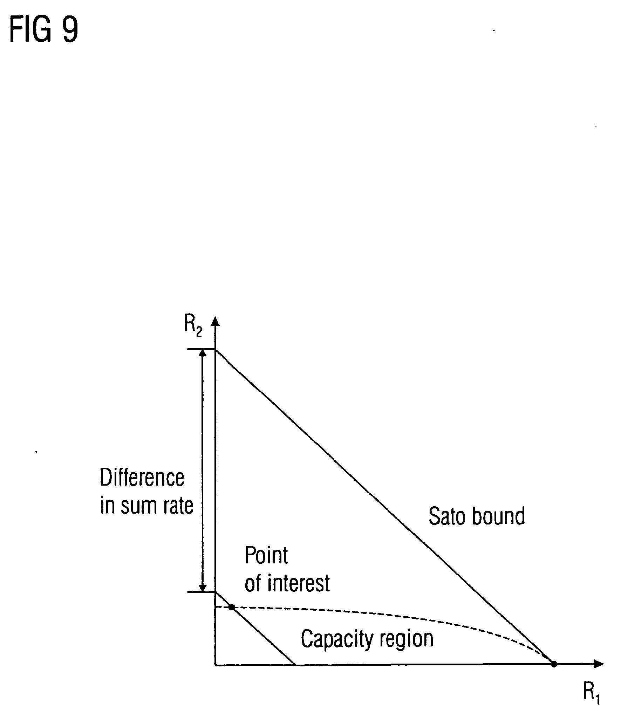

From a network operator's point of view maximizing the sum capacity is one of the most important criteria in designing communication systems. However, when strict fairness constraints are imposed on the users as in the previous sections, a partially drastic reduction in sum capacity can be observed compared to the CZF-SESAM due to the nature of the capacity region. This is especially the case when points fulfilling the given requirements lie far apart from the point of maximum sum capacity as exemplified in Figure 9 for a scenario with two users. The sum capacities $C_{sum}$ can be read off the $R_2$-axis as shown in Figure 9, because the straight lines represent the equation $R_2 = C_{sum} - R_1$. Hence while CZF-SESAM maximizes the sum capacity without any constraints, the equality constraints in the previously introduced algorithm can dominate the optimization problem and give little room for sum rate maximization. And as the example in Figure 9 shows, significant gains in sum capacity are possible by relaxing the original equality constraints. There $R_1$ can

be drastically increased, if a little reduction of $R_2$ can be accepted. For this reason we now switch from equality to inequality constraints and present a corresponding sum rate maximizing algorithm as an extension to the previously introduced algorithm. Thereby the users' rates must not fall below given minimum values. That makes also sense from a cross layer perspective, as in our algorithms the Quality of Service (QoS) requirements need to be determined by higher layers at first. Without knowledge of the physical layer's capability it is certainly easier for them to claim absolute minimum rates.

As already mentioned in the introduction we seek to maximize sum capacity with the constraints that all user rates $R_k$ must be greater or equal to predefined minimum rates $R_{k,min}$. Regarding those minimum rates we make two assumptions throughout this report:

- The CZF-SESAM algorithm as proposed in (see for example P. Tejera, W. Utschick, G. Bauch, and J. A. Nossek. A Novel Decomposition Technique for Multiuser MIMO. In Workshop on Smart Antennas, Duisburg, Apr. 2005) does not meet the minimum rate requirements. Otherwise the optimum solution has already been found by the CZF-SESAM and no further optimization is necessary.

- All minimum rate requirements can be satisfied with the available transmit power. The strategy which should be followed in the other case is beyond the scope of this patent.

In a multiuser MIMO OFDM system the described problem involves finding the optimum allocation of spatial dimensions, subcarriers and transmit power. To the authors' best knowledge the overall optimum solution cannot be found analytically. The algorithm presented in (see for example Harish Viswanathan, Sivarama Venkatesa, Howard Huang, "Downlink Capacity Evaluationof Cellular Networks with known-Interference Cancellation", IEEE Journal on Selected areas in Communicatios, 21:802-811, 2003) and its extension to OFDM systems (see for example Pedro Tejera, Wolfgang Utschick, Gerhard Bauch and Josef Nossek, "Practical Aspects of Successive Encoding Schemes for the MIMO OFDM Braudcast Channel"n in: Proceedings of ICC, 2006) cannot be applied or modified here, as they deliver the transmit co-variance matrices maximizing the weighted sum of user rates. From those weights it is not yet possible to derive absolute or relative user rates in advance.

Heuristic Algorithm

To solve the problem described above we present an heuristic algorithm which is closely related to the CZF-SESAM algorithm with strict QoS constraints introduced above in the first embodiment. We will first give a brief overview of the proposed algorithm: In Step 1 the users are classified into two groups: users in one group are served with their corresponding minimum rates, as further rate increases will be harmful for the total sum rate, while users of the other group share the remaining system resources for optimum system performance. In the second step the spatial dimensions on each subcarrier are assigned to the users. Finally in the third step the available transmit power is allocated to the resulting subchannels.

Step 1: User Classification

As we have seen above for the two user case the boundary of the capacity region achievable by the CZF-SESAM algorithm with strict QoS constraints is nearly concave. Because we have furthermore excluded the case that the point of maximum sum capacity lies within the feasible region defined by the minimum rates, it is reasonable to assume that the optimum solution will lie on the boundary of the feasible region. That means that certain users will only be served with their corresponding minimum rates. In this step those users are determined. For this purpose we resort to the sensitivity analysis of a perturbed convex optimization problem, which is explained in (see for example S. Boyd, L. Vandenberghe, "Convex Optimization", Cambridge University Press, 2004). By means of sensitivity analysis one can find out how sensitive a given convex objective function is with respect to the constraints of the optimization problem, i.e. how a change of a certain constraint affects the objective function. An example for the application of sensitivity analysis can be found in (see for example Daniel Perez Palomar, Miguel Angel Lagunas and John M. Cioffi, "Optimum Linear Joint Transmit-Receive Processing for MIMO Channels with QoS Contraints", IEEE Transactions on Signal Processing, 52:1179-1197, 2004). Therein overall transmit power is minimized, whereby the users' Minimum Square Errors (MSEs) must not fall below certain predefined values. In case these requirements cannot be satisfied with the available transmit power, sensitivity analysis is used to determine that user whose constraint should be relaxed in order to gain the largest reduction in transmit power. Here we apply sensitivity analysis to an optimization problem which aims at achieving a certain point on the boundary of the capacity region. This point must lie within the feasible domain and by sensitivity analysis we can determine the direction in which this point should be moved within the feasible domain in order to obtain a higher sum capacity. We therefore take the optimization problem from above in the first embodiment.

A point on the boundary of the capacity region is now characterized by ratios of rates, i.e.

$$q_k = \frac{R_k}{R_{\text{ref user}}}, \quad \forall k = 1, \ldots, K, k \neq \text{ref user},$$

whereby "ref user" denotes the index of an arbitrarily chosen reference user. Note that this description is equivalent to the one used in the first embodiment. It can be easily verified that $q_k = \dfrac{\rho_k}{\rho_{\text{ref user}}}$ . By choosing

$$q_k = \frac{R_{k,\min}}{R_{\text{ref user, min}}} \qquad\qquad (1.12)$$

we assure that the resulting rates are within the feasible region defined by the minimum rates (note with these requirements the rates of either all users or no user are feasible. In the latter case the transmit power is not sufficient to satisfy all minimum rate requirements. The analysis of this case is, as already mentioned in the previous section, outside the scope of this patent). As a convex optimization problem is needed for sensitivity analysis we assume that the subchannel allocation remains fixed after it has been determined according the first embodiment given the rate ratios in (1.12). Hence in the following we consider only the power allocation problem

$$\min_{p_{\ell,k}} \left( -\sum_{k=1}^{K} R_k(p_{\ell,k}) \right) = \min_{p_{\ell,k}} \left( -\sum_{k=1}^{K} \sum_{\ell=1}^{n_k} \log_2(1 + p_{\ell,k}\lambda_{\ell,k}^2) \right), \qquad (1.13)$$

$$\text{s.t.} \ \frac{R_k}{R_{\text{ref user}}} = q_k, \quad \forall k = 1, \ldots K, k \neq \text{ref user}, \quad \sum_{k=1}^{K} \sum_{\ell=1}^{n_k} p_{\ell,k} = P_{\text{Tx}}, \quad p_{\ell,k} \geq 0,$$

whereby $p_{l,k}$, $\lambda_{l,k}^2$, $P_{TX}$ and $n_k$ denote the power allocated to the k-th user on its 1-th subchannel, the gain of the 1-th subchannel of the k-th user, the total available transmit power and the number of subchannels assigned to user k, respectively. As we want to achieve the boundary of the capacity region, the power budget is fully exploited. We minimize the negative sum capacity in (1.13) in order to obtain a convex objective function. Obviously this is equivalent to maximizing sum capacity. By introducing "perturbation terms" $u_k$ in the constraints, (1.13) reads as:

$$\min_{p_{\ell,k}} \left( -\sum_{k=1}^{K} \sum_{\ell=1}^{n_k} \log_2(1 + p_{\ell,k}\lambda_{\ell,k}^2) \right) \qquad (1.14)$$

$$\text{s.t.} \ \frac{R_k}{R_{\text{ref user}}} = q_k + u_k, \quad \forall k = 1, \ldots K, k \neq \text{ref user}, \quad \sum_{k=1}^{K} \sum_{\ell=1}^{n_k} p_{\ell,k} = P_{\text{Tx}}, \quad p_{\ell,k} \geq 0.$$

The perturbation terms $u_k$ consider the fact that the constraints are no longer fixed to $q_k$ but variable, whereby we are interested in finding rules for choosing $u_k$ in a way that the maximum sum capacity will be increased. The Lagrange function of (1.14) then reads as:

$$\mathcal{L} = -\sum_{k=1}^{K} \sum_{\ell=1}^{n_k} \log_2(1 + p_{\ell,k}\lambda_{\ell,k}^2) + \tag{1.15}$$

$$+ \sum_{\substack{k=1 \\ k \neq \text{ref user}}}^{K} \nu_k \left( \frac{R_k}{R_{\text{ref user}}} - (q_k + u_k) \right) + \eta \left( \sum_{k=1}^{K} \sum_{\ell=1}^{n_k} p_{\ell,k} - P_{\text{Tx}} \right) + \sum_{k=1}^{K} \sum_{\ell=1}^{n_k} \mu_{k,\ell} p_{\ell,k}$$

with the Lagrange multipliers $\nu_k$, $\eta$ and $\mu_{k,l}$. As for the optimization problem in (1.14) strong duality is assumed and the optimum sum capacity $C_{\text{sum,opt}} = \sum_{k=1}^{K} R_{k,opt}$ is differentiable with respect to $u_k$, the following relationships between the Lagrange multipliers $\nu k$ and $C_{\text{sum,opt}}$ hold (see for example S. Boyd, L. Vandenberghe, "Convex Optimization", Cambridge University Press, 2004):

$$\left. \frac{\partial(-C_{\text{sum,opt}})}{\partial u_k} \right|_{u_1,\dots,u_K=0} = -\nu_k \quad \forall k = 1,\dots,K. \; k \neq \text{ref user}.$$

Hence if $\nu_k > 0$, the maximum sum capacity will increase for $u_k > 0$, i.e. the relative rate requirement $q_k$ can be further increased. On the other hand for users with $\nu_k < 0$ a reduction of their rate requirements is necessary for an increase in sum capacity. Applied to the original problem with minimum rate constraints it is very likely that constraining those users with $\nu_k < 0$ on their minimum rates will gain a benefit in sum capacity compared to the CZF-SESAM algorithm with strict QoS constraints applied so far. After computing the Lagrange multipliers $\nu k$ we therefore conduct the following heuristic user classification:

- Users with $\nu_k < 0$ are put into the so-called "looser" group, which will be referred to as **Group L** in the following. They will be only served with the corresponding minimum required rates.

- The remaining users are subsumed into the "winner" **Group W,** i.e. during the next steps they will gain more resources than in the current step of the algorithm. Consequently their individual rates will increase then. In the following we will maintain the relative rate constraints from (1.12) within this group for reasons that will become clearer later.

Remarks:

1) Although there are only K - 1 constraints in (1.14) and accordingly only K - 1 Lagrange multipliers relevant for our analysis, a classification of all users is possible. It can be shown that the sign of $\nu_k$ is independent of the choice of reference user. Therefore also the reference user, to which no Lagrange multiplier can be assigned in the current optimization problem, can be clearly classified without repeating the whole optimization with another reference user.

2) For the perturbed optimization problem we considered in (1.14) the new constraints introduced above imply that $u_i = 0$ for the users in Group W and $u_i < 0$ for the users in Group L. That is because their own rates are reduced compared to the unperturbed problem and the rate of the reference user, which can, without loss of generality, be assumed to belong to Group W, is very likely to increase. Trying to achieve $u_i > 0$ for the users in Group W, as suggested by the sensitivity analysis, would discriminate the reference user.

3) The sensitivity analysis is only valid near the optimum solution obtained with the initial constraints $q_k$ from (1.12). That is not only because $C_{\text{sum,opt}}$ is usually a non monotonic function of all $u_k$ and therefore the signs of the partial derivatives do not remain constant within the feasible domain. Furthermore the optimum subchannel allocation is likely to change within the whole feasible domain. To take these suboptimalities into account an iterative extension to our algorithm is presented below.

Step 2: Subchannel Allocation

As in the first embodiment, the subchannel allocation is performed successively, i.e. we start in the first spatial dimension with the subcarrier allocation, project the users' channels into the null space of the already used sub-spaces and continue until no spatial dimensions are left. By subchannels we refer to the effective SISO channels resulting from the decomposition of the MIMO broadcast channel with the CZF-SESAM algorithm. In each dimension first the number of subcarriers each user can occupy is determined. For the users in Group L the number of subcarriers $N_{i,k}$ the k-th user gains in the i-th dimension is computed according to:

$$N_{i,k} = \frac{R_{k,min}}{R_k^{(1)}} N_{i,k}^{(1)}.$$

Thereby $N_{i,k}^{(1)}$ denotes the number of subcarriers the k-th user has occupied in the spatial dimension i after running the CZF-SESAM algorithm with strict QoS constraints during Step 1. $R_k^{(1)}$ is the total rate user k would achieve with the resource allocation determined in Step 1. The remaining subcarriers

$$N - \sum_{k \in \text{Group L}} N_{i,k}$$

are distributed amongst the users in Group W in the same way as the total number of subcarriers is distributed to the users in the CZF-SESAM algorithm with strict QoS constraints in the first embodiment. The necessary requirements are again chosen according to Equation (1.12), whereby the reference user is an arbitrary user of Group W. The actual subcarrier allocation for all users is then performed as in the first embodiment.

Step 3: Power Allocation

First power is assigned to the subchannels occupied by the users of Group L. The aim is thereby to satisfy the minimum rate requirements with as little transmit power as possible. Mathematically this optimization problem reads as:

$$\min_{p_{\ell,k}} \left( \sum_{k \in \text{Group L}} \sum_{\ell=1}^{n_k} p_{\ell,k} \right) \qquad (1.16)$$

$$\text{s.t.} \ \sum_{\ell=1}^{n_k} \log_2(1 + p_{\ell,k} \lambda_{\ell,k}^2) = R_{k,min}. \quad \forall k \in \text{Group L.} \quad p_{\ell,k} \geq 0.$$

As in the CZF-SESAM algorithm with strict QoS constraints, the solution to (1.16) is "watefilling with user specific waterlevels $\eta_k$" (compare the first embodiment):

$$p_{\ell,k} = \max\left\{0, \left(\eta_k - \frac{1}{\lambda_{\ell,k}^2}\right)\right\}.$$

Considering the rate constraints in (1.16), the waterlevels compute according to:

$$\eta_k = 2^{\frac{R_{k,\min} - \sum_{\ell=1}^{\hat{n}_k} \log_2(\lambda_{\ell,k}^2)}{\hat{n}_k}},$$

whereby $\hat{n}_k \le n_k$ denotes the number of subchannels with $p_{l,k} > 0$ and it is assumed that the $\lambda_{l,k}^2$ are arranged in descending order from $1 = 1$ to $1 = n_k$. As $\hat{n}_k$ is unknown, the powers $p_{l,k}$ have to be determined iteratively: First the waterlevels $\eta_k$ are computed with $\hat{n}_k = n_k$. Then the corresponding powers $p_{l,k}$ are determined. With those $\hat{n}_k$ can be updated and new waterlevels can be calculated. If $\hat{n}_k$ remains constant from one iteration to another, the algorithm has converged. Afterwards the remaining power is distributed to the users in Group W. Applying pure watefilling over the corresponding subchannels is optimum for sum capacity but does not guarantee compliance with the minimum rate requirements. Using the relative requirements from (1.12) it becomes very unlikely that these constraints are not met, as more resources than in step 1 are now available for the users in Group W. This choice also provides fairness within Group W. Hence the power allocation problem reads as

$$\min_{P_{\ell,k}} \left(-\sum_{k \in \text{Group W}} \sum_{\ell=1}^{n_k} \log_2(1 + p_{\ell,k}\lambda_{\ell,k}^2)\right)$$

$$\frac{\sum_{\ell=1}^{n_k} \log_2(1 + p_{\ell,k}\lambda_{\ell,k}^2)}{\sum_{\ell=1}^{n_{\text{ref user}}} \log_2(1 + p_{\ell,\text{ref user}}\lambda_{\ell,\text{ref user}}^2)} = q_k \quad \forall k \in \text{Group W}, k \ne \text{ref user}, \quad p_{\ell,k} \ge 0.$$

This optimization problem is identical to the power allocation problem belonging to (1.7), whereby the conversion from $q_k$ to the shares $p_k$ of the sum capacity used in the previous sections is done via the set of equations:

$$q_k = \frac{\rho_k}{\rho_{\text{ref user}}}, \qquad \sum_{k \in \text{Group W}} \rho_k = 1.$$

The problem is therefore solved by applying the iterative algorithm from the first embodiment.

Furthermore, it is also possible to derive a formula for the computation of the Lagrange multipliers $v_k$ in the convex optimisation problem (1.14). The optimum transmit power distribution can be obtained, as shown in the solution of equation 1.7 (see above) via a "waterfilling with user dependent water level $\xi_k$", i.e.

$$p'_{\ell,k} = \max\left\{0, \left(\xi_k - \frac{1}{\lambda^2_{\ell k}}\right)\right\}.$$

Inserting these solutions into the Karush-Kuhn-Tucker (KKT) conditions leads to:

$$v_k = (1 - \xi_k \eta \ln 2)R_{\text{ref user, opt}}, \quad \forall k \neq \text{ref user},$$

whereby $R_{\text{ref user, opt}}$ is the optimum rate of the reference user after running the CZF-SESAM QoS algorithm with the strict requirements. Furthermore we obtain from the KKT conditions:

$$\eta = \frac{1}{\xi_{\text{ref user}} \ln 2}\left(1 + \sum_{\substack{k=1 \\ k \neq \text{ref user}}}^{K} \frac{v_k q_k}{R_{\text{ref user, opt}}}\right).$$

Solving this linear system of equations results in

$$v_k = \frac{R_{\text{ref user, opt}}}{1 + \sum_{\substack{i=1 \\ i \neq \text{ref user}}}^{K} \frac{\xi_i}{\xi_{\text{ref user}}} q_i}\left(\left(1 - \frac{\xi_k}{\xi_{\text{ref user}}} q_i\right) + \sum_{\substack{i=1 \\ i \neq \text{ref user}}}^{K} \frac{\xi_k}{\xi_{\text{ref user}}} q_i\left(\frac{\xi_i}{\xi_k} - 1\right)\right).$$

By replacing $q_i = \frac{\rho_i}{\rho_{\text{ref user}}}$, whereby $\rho_i$ denotes as in the previ-ous section the share user i gains from the total sum capacity, we get:

$$v_k = \frac{R_{\text{ref user opt}}}{\sum_{i=1}^{K} \xi_i \rho_i}\left(\rho_{\text{ref user}}\left(\xi_{\text{ref user}} - \xi_k\right) + \sum_{\substack{i=1 \\ i \neq \text{ref user}}}^{K} \rho_i(\xi_i - \xi_k)\right).$$

This expression can be further simplified by exploiting $\sum_{i=1}^{K} \rho_i = 1$ to:

$$v_k = \left(1 - \frac{\xi_k}{\sum_{i=1}^{K} \xi_i \rho_i}\right)R_{\text{ref user, opt}}$$

As all transmission rates are greater or equal to zero and the waterlevels $\xi_k$ are independent of the choice of the reference user, the sign of $\upsilon_k$ is identical for all possible choices of the reference user.

Iterative Extension

While running the heuristic algorithm proposed in the previous section we moved from one point on the boundary of the capacity region to another on the basis of a local sensitivity analysis at the first point. Clearly it can happen that at the second point the user classification done in Step 1 can no longer be justified, i.e. there are users in Group W, whose rate requirements should now also be reduced in order to increase sum capacity. On the other hand there might be users in Group L, which could contribute to a higher sum capacity without being forced to their minimum rate requirement. If the computational resources are available and the results of the above algorithm are dissatisfactory, we therefore propose an iterative application of the algorithm. In step 1 of each further iteration the Lagrange multipliers are determined the same way as described in the previous section, but with new requirements

$$q_k^{(n)} = \frac{R_k^{(n-1)}}{R_{\text{ref user}}^{(n-1)}};\qquad\qquad (1.17)$$

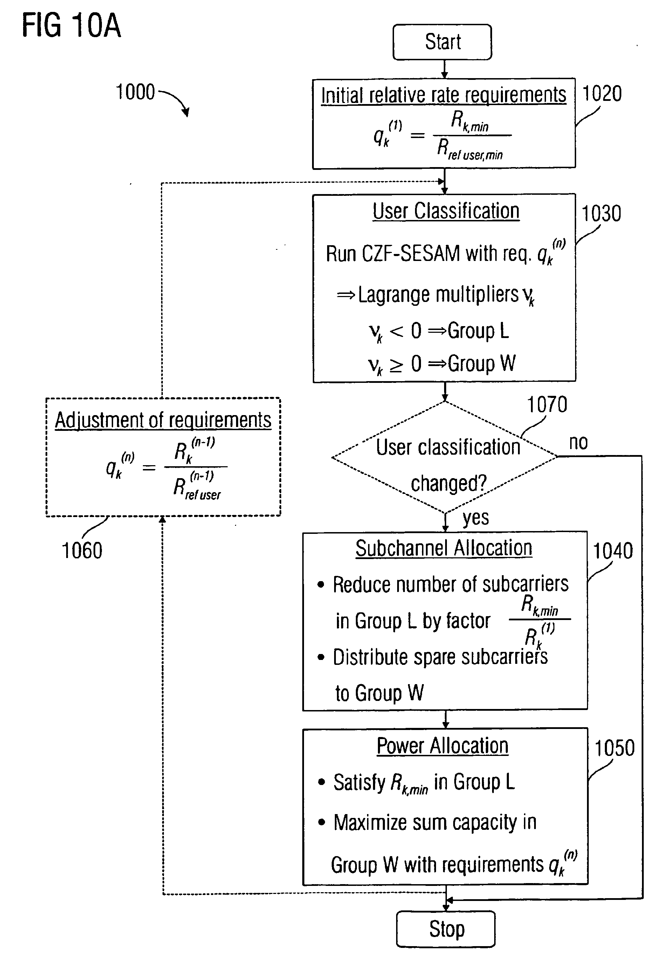

whereby $R_k^{(n-1)}$ denote the rates obtained through the previous iteration. If the signs of the Lagrange multipliers have changed compared to the last iteration, we adjust the user classification accordingly and repeat steps 2 and 3. Otherwise no further changes of the requirements in the proposed directions are possible and the algorithm has converged. As a side effect gains in sum capacity can also be possible in this case. The rates achieved with the CZF-SESAM algorithm with the strict rate requirements in (1.17) are often slightly higher than those rates computed with the heuristic algorithm before. We can therefore use these rates, which can be computed with little extra computational effort during the determination of the Lagrange multipliers, as output of the algorithm. During an iterative application of the algorithm it is also possible to consider maximum rate requirements, i.e. it can be avoided that a user in Group W receives more capacity than its application can make use of. If in one iteration a user's rate is larger than the maximum it can exploit, that user is added to Group L with the corresponding maximum rate as requirement for the next iterations. The whole algorithm is visualized in Figure 10A, whereby the dashed boxes are skipped when the iterative extension is not applied.

To be more specific, Fig. 10A discloses a flow chart 1000. Herein, in a first step 1020, individual relative rate requirements are calculated for all users, wherein one user is chosen as reference user). The determination is performed by dividing the minimum transmission rate of a user under analysis (user k) by the minimum transmission rate of the reference user. Hereby a transmission rate ratio for the user under analysis (user k) is obtained for the first iteration. Following, a step of user classification 1030 is performed in which, for example, the CZF-SESAM algorithm is performed with the computed transmission rate ratio determined in the first step for the user under analysis. Furthermore, for example, a Lagrange optimization problem is solved such that Lagrange multipliers $\upsilon_k$ are obtained according to the algorithm previously described in detail. The classification is then performed on the basis of the value of the Lagrange multiplier $\nu_k$, wherein the user under analysis is grouped into the group L if the Lagrange multiplier $\nu_k$ for the user under analysis is negative. Contrary, if the Lagrange multiplier $\nu_k$ for the user under analysis is not negative, the user is classified into group W.

Following, in step 1040, a subchannel allocation is performed, in which the number of subcarriers in group L is reduced by the factor $R_{k,\min}/R_k^{(1)}$ and, wherein the step of subchannel allocation 1040 furthermore comprises a distribution of the spare subcarrier to group W, wherein the spare subcarriers are these subcarriers which became free due to the reduction of a number of subcarriers in group L. Furthermore, in a subsequent step 1050, power allocation is performed such that the minimum transmission rate of the users grouped into group L is satisfied. Furthermore, it is then possible to maximize the sum capacity of the users grouped in group W with the requirements of the transmission rate ratios calculated for the user k in order to reach the boundary of the capacity region.

In a further iterative extension, an adjustment of the requirements can be performed in a subsequent step 1060, in which for each user k an update of the transmission rate ratio $q_k^{(n)}$ is performed, wherein the variable n indicates the iteration number. Following the step of adjustment of requirements 1060, the step of user classification 1030 can be performed again in order to determine whether a re-classification of users has to be performed such that the maximum sum transmission capacity of the communication channel is approached. Following, if the algorithm 1000 is performed iteratively, a step of determination whether the user classification has changed, is performed (step 1070). If the a user was reclassified in the user classification in step 1030, the step of a subchannel allocation 1040, the step of power allocation 1050 and the step of adjustment of a requirements 1060 as well the step of user classification 1030 is performed once more, such that an recursive iteration loop is closed. In the case that the user classification in step 1030 was not changed, the algorithm converges, and a further iteration is not necessary.

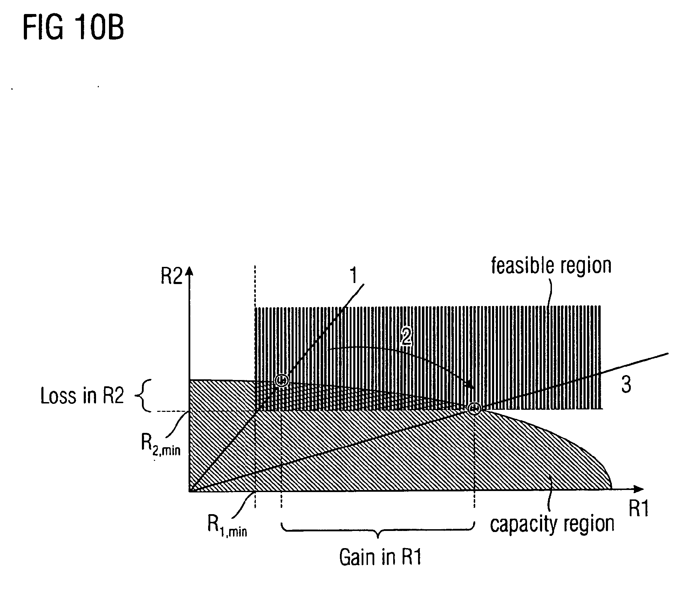

Summarizing the general principle reference is made to Fig. 10B. Herein, a first starting point is determined, in which user 1 and 2 each obtain a defined transmission rate. In Fig. 10B this starting point is within the feasible region and is defined by the intersection point of a line 1 with the boundary of the capacity region. Herein, the feasible region is defined by the region of transmission rate for the first and the second users in which the first and the second users have assigned a transmission rate being above the respective minimum transmission rate. As can be seen from Fig. 10B, it is possible to increase the transmission capacity of user 1 without violating the minimum transmission rate constraint of user 2. This is denoted in Fig. 10B by the arrow 2. The direction, in which the respective allocation of resources to the first and second users have to be changed, is calculated in the heuristic algorithm , especially by the indication variable which is, for example, a Lagrange multiplier for the respective user. Therefore, the arrow denoted with reference numeral 2 indicates a determination of the direction of increasing the sum capacity, preferably by the above-mentioned sensitivity analysis. Further, according to the second approach, the algorithm is aimed to go in the determined direction as far as possible and adjust the subcarrier power allocation accordingly such as to obtain a resource allocation in which user 2 has the minimum transmission capacity. This allocation is denoted in Fig. 10B by the intersection point of line 3 with the boundary of the capacity region. Thus, it can be seen from Fig. 10B that a small loss results in transmission capacity for user 2, having finally the minimum transmission rate $R_{2,min}$, whereas user 1, having transmission rate $R_1$ can achieve a large gain in transmission capacity.

However, it has to be mentioned that it is not mandatory that the starting point for the approach is determined by the algorithm according to the first preferred embodiment of the present invention. Rather, it is also possible that the starting point for the algorithm is chosen either mutually (preferably within the feasible region) or by another algorithm as the algorithm according to the first preferred embodiment of the present invention. Therefore, the above described individual steps can be performed all independently from the approach according to the first preferred embodiment of the present invention.

Simulation Results

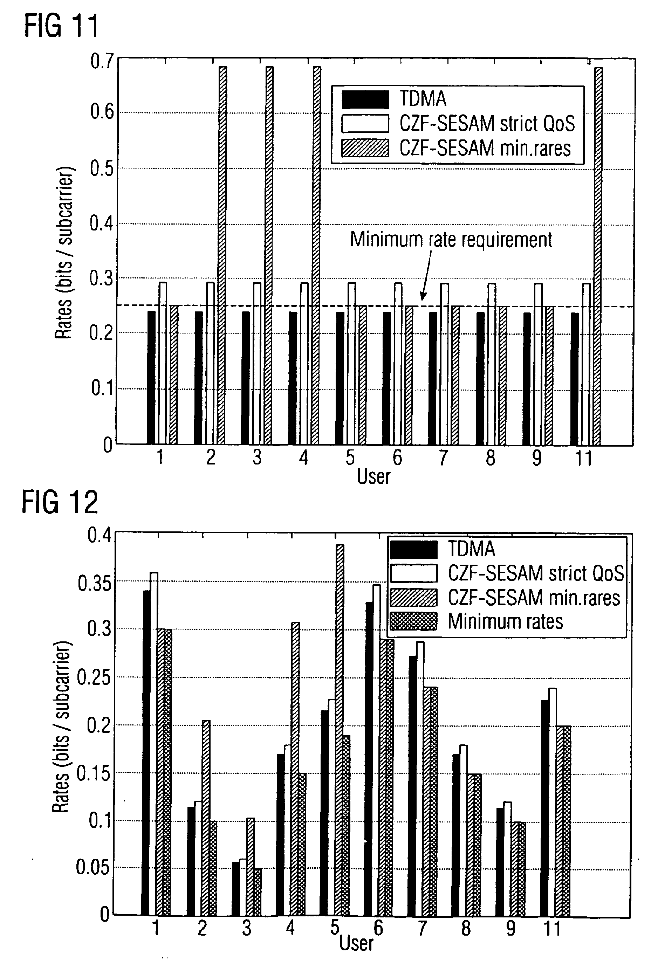

For all simulations shown in this section we use the measured channels. The access point is a Uniform Linear Array with 4 antennas and the receivers are equipped with two antennas each. The OFDM system consists of N = 1024 subcarriers and the bandwidth is 130 MHz. The receive SNR is 20 dB in the strongest channel. Figure 11 exhibits the individual users' rates in this scenario for equal minimum rate requirements, i.e. $R_{1,min} = R_{K,min}$ = 0.25 bits/subcarrier. We see from Figure 11 that users 2, 3, 4 and 11 achieve significant gains, when the other users are restricted to their minimum required rates, compared to the CZF-SESAM algorithm started with strict requirements. Thereby the sum capacity increases by 45.5% from 2.91 bits/subcarrier to 4.24 bits/subcarrier. For comparison the rates achieved in a TDMA system are also included into Figure 11, whereby the time slots are assigned to the users such that the QoS constraints with equal rates for all users can be fulfilled. TDMA performs worse than the CZF-SESAM algorithm with the same QoS constraints, in this specific example the minimum rate requirements cannot even be met with TDMA. Our proposed algorithm improves the sum capacity achieved with TDMA by 78.2%. Figure 12 shows the users' rates for the same spatial scenario but with different minimum rate requirements, which are given in Table 1.

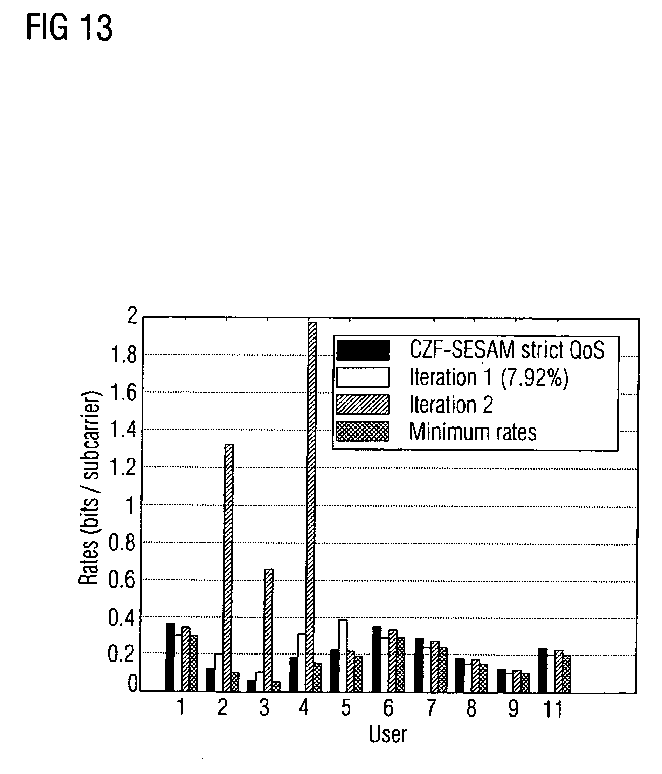

Table 1. Minimum rates for simulation results in Figure 12 and Figure 13

| User | 1 | 2 | 3 | 4 | 5 | 6 | 7 | 8 | 9 | 11 |
|---|---|---|---|---|---|---|---|---|---|---|
| $R_{k,min}$ (bits/subcarrier) | 0.3 | 0.1 | 0.05 | 0.15 | 0.19 | 0.29 | 0.24 | 0.15 | 0.1 | 0.2 |

Here the gains of our algorithm are low compared to the previous example, the sum capacity is only increased by 7.9% from 2.11 bits/subcarrier (CZF-SESAM with strict QoS) to 2.28 bits/subcarrier. TDMA is outperformed in sum capacity by 13.7%. By running our algorithm iteratively with the minimum rate requirements from the previous example (see Table 1), the rates shown in Figure 13 can be achieved, whereby convergence can be observed after the second iteration. The users 2, 3 and 4 experience drastic increases in their transmission rates while the other users are set to their corresponding minimum rates. These users are the closest to the access point and therefore strong improvements can be achieved by shifting some resources from other users to them. Overall sum capacity is increased by 165% compared to the CZF-SESAM algorithm with strict QoS. In absolute values the sum capacity grows from 2.11 bits/subcarrier to 5.61 bits/subcarrier. Hence while in the first iteration little gains are achieved, the second iteration really has proofed worth the extra effort. Note that due to the side effect explained above the rates of the users in Group L are slightly higher than the required minimum rates in Figure 13.

Summarizing it has to be mentioned that instead of relative rate requirements, each user can be assigned a minimum rate constraint. This amendment of constraints can lead to significant gain in sum capacity. The main feature of this approach is a user classification, whereby one group of users is preferably served with their corresponding minimum rates while other users preferably share the remaining resources in order to achieve optimum system performance in terms of some capacity.

Depending on certain implementation requirements, the inventive methods can be implemented in hardware or in software. The implementation can be performed using a digital storage medium, in particular, a disc or a CD having electronically readable control signals stored thereon, which can cooperate with a programmable computer system such that the inventive methods are performed. Generally, the present invention is therefore a computer program product with a program code stored on a machine-readable carrier, the program code performing the inventive methods, when the computer program product runs on a computer. In other words, the inventive methods are, therefore, a computer program having a program code for performing the inventive methods, when the computer program runs on a computer.

**Claims**

1. Subchannel allocation apparatus (400) being configured for allocating subchannels of a communication channel for transmission in a multicarrier multiple-input-multiple-output transmitter to a first user (414) of K users, where $K \geq 2$, and to a second user (418), a subcarrier block having one or more subcarrier and at least one subchannel for the first user (414), a subchannel referring to a single-input-single-output channel of a decomposed multiple-input-multiple-output communication channel, and one subchannel for the second user (418), each subchannel having assigned a singular value based on a channel matrix of the communication channel, the first user (414) being initially assigned a first ratio (412) $\rho_1$ of the transmission capacity of the communication channel and the second user (418) being initially assigned a second ratio (416) $\rho_2$ of the transmission capacity of the communication channel, the subchannel allocation apparatus (400) comprising:

   a selector (402) being configured for selecting on each subcarrier block one or more singular values for the first user (414) and one or more singular values for the second user (418);
   a spectral allocator (410) being configured for determining a first capacity the first user (414) can achieve in the communication channel using all subcarriers of the subcarrier block and using the one or more selected singular values for the first user (406) and for determining a second capacity the second user (418) can achieve in the communication channel using all subcarriers of the subcarrier block and using the one or more selected singular values for the second user (408), wherein the spectral allocator (410) is further configured for evaluating an intersection point of a plane **y** being defined by tuples of rates corresponding to the first and the second capacities and a straight line **x** being defined by the first (412) $\rho_1$ and second (416) ratios $\rho_2$, which are given QoS constraints to determine a first spectral portion (420) of the spectrum in terms of a first number of subcarriers of the communication channel to be used for transmission to the first user (414) and a second spectral portion (422) in terms of a second number of subcarriers of the communication channel to be used for transmission to the second user (418), wherein the plane **y** is defined by the following tuples of rates

$$R_1 = [C_1 \quad 0 \quad \dots \quad 0]^T$$
$$R_2 = [0 \quad C_2 \quad \dots \quad 0]^T$$
$$\vdots$$
$$R_K = [0 \quad 0 \quad \dots \quad C_K]^T,$$
$$\mathbf{y} = \alpha_1 R_1 + \alpha_2 R_2 + \dots + \alpha_K R_K, \text{ with}$$
$$\alpha_1 + \alpha_2 + \dots + \alpha_K = 1$$

   where $C_1$ is the first capacity, $C_2$ is the second capacity and $C_K$ is the capacity of a user K, and the line is defined by $\mathbf{x} = \eta\rho = \eta[\rho_1, \rho_2,\dots, \rho_k]^T$, wherein $\rho_k$ is a ratio of the transmission capacity of the communication channel assigned to user K; and

a determiner (424) being configured for selecting a single subchannel in each subcarrier block and for assigning each of the selected subchannels to the respective user the selected subchannel corresponds to and when the assignment is not in agreement with the first and second numbers of subcarriers modifying the assignment to match the first and second numbers of subcarriers.

2. Subchannel allocation apparatus (400) according to claim 1, wherein the subcarrier blocks each consist of a single subcarrier.

3. Subchannel allocation apparatus (400) according to one of claims 1 or 2, wherein the selector (402) is configured for selecting the largest singular value for the first user (414) in each subcarrier block and for selecting the largest singular value for the second user (418) in each subcarrier block.

4. Subchannel allocation apparatus (400) according to one of claim 1 to 3, wherein the spectral allocator (410) is configured for forming a first rate vector ($R_1$) from the first capacity, for forming a second rate vector ($R_2$) from the second capacity and for forming a ratio vector ($\rho$) from the first and second ratios, wherein the spectral allocator (410) is further configured for determining the first and second spectral portions (420, 422) by solving an equation comprising the first and second rate vectors ($R_1$, $R_2$) and the ratio vector ($\rho$).

5. Subchannel allocation apparatus (400) according to claim 4, wherein the spectral allocator (410) is configured for weighting the first rate vector with the first spectral portion (420) and for weighting the second rate vector ($R_2$) with the second spectral portion (422) in order to form said equation, wherein the spectral allocator (410) is further configured for considering an additional constraint concerning a sum of the first and second spectral portion (420, 422) when solving said equation.

6. Subchannel allocation apparatus (400) according to one of claims 4 to 5, referring to claim 2, wherein the determinator (424) is configured for determining a first number of subcarriers to be used for transmission to the first user (414) by multiplying the first spectral portion (420; $\alpha_1$) with the number of subcarriers (C) of the communication channel and for determining a second number of subcarriers to be used for transmission to the second user (418) by multiplying the second spectral portion (422; $\alpha_2$) with a number of subcarriers (C) of the communication channel.

7. Subchannel allocation apparatus (400) according to claim 6, wherein the determiner (424) is configured for rounding the first number of subcarriers $\gamma_k$ in order to obtain a first rounded number ($\hat{\gamma}_k$) of subcarriers and rounding the second number of subcarriers ($\gamma_k$) in order to obtain a second rounded number of subcarriers ($\hat{\gamma}_k$) wherein the determiner (424) is further configured for summing the first and second rounded numbers of subcarriers ($\hat{\gamma}_k$) and for subtracting the resulting sum from the number of subcarriers (C) of the communication channel in order to obtain a signalling variable (m).

8. Subchannel allocation apparatus (400) according to claim 7, wherein the determiner (424) is configured for increasing the rounded number of subcarriers of the user having the smallest difference between the respective rounded number of subcarriers and the respective number of subcarriers in the case that the signalling variable (m) is positive or wherein the determiner (424) is configured for reducing the rounded numbers of subcarriers ($\hat{\gamma}_k$) of the user having the largest difference between the respective rounded number of subcarriers and the respective number of subcarriers in the case that the signalling variable is negative.

9. Subchannel allocation apparatus (400) according to one of the claims 1 to 8, wherein the determiner (424) is configured for selecting in each subcarrier block the subchannel having the highest singular value ($\lambda$).

10. Subchannel allocation apparatus (400) according to one of claims 1 to 9, wherein the determiner (424) is configured for determining a number of subchannels to be allocated to the first user and a number of subchannels to be allocated to the second user (418), wherein the determiner (424) is configured for using the number of subchannels to be allocated to the respective users and the rounded number of a subcarrier ($\hat{\gamma}_k$) of the respective users in order to determine whether a reallocation of subchannels to users is to be performed.

11. Subchannel allocation apparatus (400) according to claim 10, wherein the determiner (424) is configured for determining a first set of users to which subchannels are to be allocated, a second set of users from which subchannels are to be removed, a set of subcarrier blocks on which a user of the second set of users is assigned a subchannel and a set of difference values between the singular value of the subchannels assigned to the users in the first set of users and singular values of subchannels in subcarrier blocks of the set of subcarrier blocks which are not selected by the selector (402), and wherein the determinator (424) is configured for, in respect to a distinct subchannel on a distinct subcarrier block assigned to a user of the second set of users, determining the smallest difference value for the distinct subchannel from the set of difference values, identifying the subcarrier block and the user corresponding to the determined smallest difference value with the distinct subchannel, allocating the identified subchannel block to the identified user such that the subchannel of the identified subcarrier block is allocated for transmission to the identified user and updating the set of subcarrier blocks.

12. Subchannel allocation apparatus (400) according to claim 11, wherein the determiner (424) is configured for iteratively allocating a subcarrier block of the set of subcarrier blocks to a user of the first set of users, and wherein in a subsequent iteration step the updated set of subcarrier blocks of a preceding iteration step is used.

13. Subchannel alloction apparatus (400) according to one of claims 1 to 12, comprising a memory for storing subchannels being not allocated for a transmission to the first or second user, wherein the subchannel allocation apparatus is configured for iteratively allocating subchannels stored in said memory to users, and wherein the subchannel allocation apparatus (400) is furthermore configured for deleting the subchannels allocated for transmission to a user from said memory.

14. Subchannel allocation apparatus (400) according to one of claims 1 to 13, the subchannel allocation apparatus (400) having a subchannel reallocation unit (450) the subchannel reallocation unit (450) having a subcarrier allocation scheme for allocating a first group of subcarrier blocks (456) of a communication channel to the first user (460; 414) and for allocating a second group of subcarrier blocks (462) of the communication channel to the second user (466; 418), the first user (460) having a first minimum transmission rate (458) and the second user (466) having a second minimum transmission rate (464), the subchannel allocation apparatus (400) further comprising:

a classifier (452) being configured for deriving an indication variable ($v_k$) for the second user (466) from an optimisation problem, the optimisation problem being directed to maximize the transmission capacity through the communication channel and being based on the first and second minimum transmission rate, the indication variable ($v_k$) having a first range of values indicating that, if a value of the indication variable ($v_k$) is in the first range of values, an increase of the transmission rate of the second user is operative for decreasing the transmission capacity through the communication channel and the indication variable ($v_k$) having a second range of values indicating that, if a value of the indication variable is in the second range of values, an increase of the transmission rate of the second user is operative for increasing or keeping constant the transmission capacity of the communication channel, wherein the classifier (452) is configured for classifying the second user (466) into a first classification group (group L), if the indication variable is in the first range of values or for classifying the second user (466) into a second classification group (group W), if the indication variable is in the second range of values; and
an allocator (454) being configured for reducing the number of subcarrier blocks of the second group of subcarrier blocks (462) and for increasing the number of subcarrier blocks of the first group of subcarrier blocks (456) in the case the second user (466) is classified into the first classification group (group L).

15. Subchannel allocation apparatus (400) according to claim 14, further comprising a ratio provider being configured for providing a transmission rate ratio of the second minimum transmission rate (464) and the first minimum transmission rate (458), and wherein the classifier (452) is configured for deriving the indication variable from the optimisation problem, the optimisation problem being based on the transmission rate ratio, wherein the indication variable is indicative that, if a value of the indication variable is in the first range of values, an increase of the transmission rate ratio is operative for decreasing the transmission capacity of the communication channel, and wherein the indication variable is indicative that, if a value of the indication variable is in the second range values, an increase of the transmission rate ratio is operative for increasing or keeping constant the transmission capacity of the communication channel.

16. Subchannel allocation apparatus (400) according to claims 14 or 15, wherein the classifier (452) is configured for using a transmission rate of the first user and a transmission rate ratio value for the first and the second user in order to classify the first user into the first or second classification group, and wherein the allocator (454) is configured for reducing the number of subcarrier blocks of the first group of subcarrier blocks (456) and for increasing the number of subcarrier blocks of the second group of subcarrier blocks (462) in the case that the first user is classified into the first classification group.

17. Subchannel allocation apparatus (400) according to one of claims 14 to 16, wherein the allocator (454) is configured for at least allocating a number of subcarrier blocks to the second user such that the second user obtains the second minimum transmission rate.

18. Subchannel allocation apparatus (400) according to one of claims 14 to 17, comprising a power allocator being configured for firstly allocating power to the subcarrier blocks of the second group of subcarrier blocks (462) in order to provide the second minimum transmission rate to the second user (466) and for secondly allocating power to the subcarrier of the first group of subcarrier blocks in order to maximize the sum transmission capacity on the subcarrier blocks of the first group of subcarrier blocks.

19. Subchannel allocation apparatus (400) according to one of claims 14 to 18, wherein the classifier (452) is configured for calculating a Lagrange optimization problem.

20. Subchannel allocation apparatus (400) according to one of claims 15 to 19, wherein the allocator (454) is configured for determining a rate for the second user (466) and a rate for the first user (460) based on the number of subcarrier blocks being assigned to the first and second users (406, 466) respectively by the allocator (454), wherein the allocator (454) is configured for iteratively providing said determined rate for the first and second user (406, 466) to the ratio provider, and wherein the ratio provider is configured for providing a transmission rate ratio on the basis of the rate for the first and second user (460, 466) provided by the allocator (454).

21. Subchannel allocation apparatus (400) according to claim 20, the first user (460) having a maximum transmission rate, wherein the classifier (452) is configured for classifying the first user into the first classification group (group L), if the first user (460) is allocated a number of subcarrier blocks resulting in a transmission rate for the first user (460) being higher than the maximum transmission rate.

22. Method for subchannel allocation for allocating subchannels of a communication channel for transmission in a multicarrier multiple-input-multiple-output transmitter to a first user (414) of K users, where $K \geq 2$, and to a second user (418), a subcarrier block having one or more subcarriers and at least one subchannel for the first user (414), a subchannel referring to a single-input-single-output channel of a decomposed multiple-input-multiple-output communication channel, and one subchannel for the second user (418), each subchannel having assigned a singular value based on a channel matrix of the communication channel, the first user (414) being initially assigned a first ratio (412) $\rho_1$ of the transmission capacity of the communication channel and the second user (418) being initially assigned a second ratio (416) $\rho_2$ of the transmission capacity of the communication channel, the method of subchannel allocation comprising the steps of:

selecting on each subcarrier block one or more singular values for the first user (414) and one or more singular values for the second user (418);
determining a first capacity the first user (414) can achieve in the communication channel using all subcarriers of the subcarrier block and using the one or more selected singular values for the first user (406) and for determining a second capacity the second user (418) can achieve in the communication channel using all subcarriers of the subcarrier block and using the one or more selected singular values for the second user (408), evaluating an intersection point of a plane **y** being defined by tuples of rates corresponding to the first and the second capacities and a straight line **x** being defined by the first (412) $\rho_1$ and second (416) $\rho_2$ ratios, which are given QoS constraints to determine a first spectral portion (420) in terms of a first number of subcarriers of the communication channel to be used for transmission to the first user (414) and a second spectral portion (422) in terms of a first number of subcarriers of the communication channel to be used for transmission to the second user (418) wherein the plane **y** is defined by the following tuples of rates

$$R_1 = [C_1 \quad 0 \quad \ldots \quad 0]^T$$

$$R_2 = [0 \quad C_2 \quad \ldots \quad 0]^T$$

.

.

.

$$R_K = [0 \quad 0 \quad \ldots \quad C_K]^T,$$

$$\mathbf{y} = \alpha_1\mathbf{R}_1 + \alpha_2\mathbf{R}_2 + \ldots + \alpha_K\mathbf{R}_K \text{ , with}$$

$$\alpha_1 + \alpha_2 + \ldots + \alpha_K = 1$$

where $C_1$ is the first capacity, $C_2$ is the second capacity and $C_K$ is the capacity of a user K, and the line is defined by $\mathbf{x} = \eta\rho = \eta[\rho_1, \rho_2,..., \rho_k]^T$, wherein $\rho_k$ is a ratio of the transmission capacity of the communication channel assigned to user K; and

selecting a single subchannel in each subcarrier block and assigning each of the selected subchannels to the respective user the selected subchannel corresponds to and when the assignment is not in agreement with the first and second numbers of subcarriers modifying the assignment to match the first and second numbers of subcarriers.

23. Computer program having a program code for performing the method according to claim 22 when the computer program runs on a computer.

**Patentansprüche**

1. Unterkanalzuweisungsvorrichtung (400), die zum Zuweisen von Unterkanälen eines Kommunikationskanals für eine Übertragung in einem Mehrträger-Mehreingang-Mehrausgang-Sender an einen ersten Benutzer (414) von K Benutzern, wobei K ≥ 2, und an einen zweiten Benutzer (418) konfiguriert ist, wobei ein Unterträgerblock einen oder mehrere Unterträger und zumindest einen Unterkanal für den ersten Benutzer (414), wobei sich ein Unterkanal auf einen Einzeleingang-Einzelausgang-Kanal eines zerlegten Mehreingang-Mehrausgang-Kommunikationskanals bezieht, und einen Unterkanal für den zweiten Benutzer (418) aufweist, wobei jedem Unterkanal ein singulärer Wert basierend auf einer Kanalmatrix des Kommunikationskanals zugewiesen ist, wobei dem ersten Benutzer (414) anfänglich ein erstes Verhältnis (412) $\rho_1$ der Übertragungskapazität des Kommunikationskanals zugewiesen ist und dem zweiten Benutzer (418) anfänglich ein zweites Verhältnis (416) $\rho_2$ der Übertragungskapazität des Kommunikationskanals zugewiesen ist, wobei die Unterkanalzuweisungsvorrichtung (400) folgende Merkmale aufweist:

einen Selektor (402), der an jedem Unterträgerblock zum Auswählen eines oder mehrerer singulärer Werte für den ersten Benutzer (414) und eines oder mehrerer singulärer Werte für den zweiten Benutzer (418) konfiguriert ist;

einen Spektralzuweiser (410), der zum Bestimmen einer ersten Kapazität, die der erste Benutzer (414) in dem Kommunikationskanal unter Verwendung aller Unterträger des Unterträger des Unterträgerblocks und unter Verwendung des einen oder der mehreren ausgewählten singulären Werte für den ersten Benutzer (406) erreichen kann, und zum Bestimmen einer zweiten Kapazität, die der zweite Benutzer (418) in dem Kommunikationskanal unter Verwendung aller Unterträger des Unterträgerblocks und unter Verwendung des einen oder der mehreren ausgewählten singulären Werte für den zweiten Benutzer (418) erreichen kann, konfiguriert ist, wobei der Spektralzuweiser (410) ferner konfiguriert ist zum Auswerten eines Schnittpunkts einer Ebene **y,** die durch Tupel von Raten definiert ist, die der ersten und der zweiten Kapazität entsprechen, und einer Geraden **x,** die durch das erste (412) $\rho_1$ und zweite (416) $\rho_2$ Verhältnis definiert ist, die gegebene QoS-Beschränkungen sind, um einen ersten Spektralabschnitt (420) des Spektrums hinsichtlich einer ersten Anzahl von Unterträgern des Kommunikationskanals, die für eine Übertragung an den ersten Benutzer (414) verwendet werden sollen, und einen zweiten Spektralabschnitt (422) hinsichtlich einer zweiten Anzahl von Unterträgern des Kommunikationskanals, die für eine Übertragung an den zweiten Benutzer (418) verwendet werden sollen, zu bestimmen, wobei die Ebene **y** durch die folgenden Tupel von Raten definiert ist

$$R_1 = [C_1 \ 0 \ \dots \ 0]^T$$

$$R_2 = [0 \ C_2 \ \dots \ 0]^T$$

$$.$$

$$.$$

$$.$$

$$R_K = [0 \ 0 \ \dots \ C_K]^T,$$

$$\mathbf{y} = \alpha_1\mathbf{R}_1 + \alpha_2\mathbf{R}_2 + \dots + \alpha_K\mathbf{R}_K \ , \ \text{mit}$$

$$\alpha_1 + \alpha_2 + \dots + \alpha_K = 1$$

wobei $C_1$ die erste Kapazität ist, $C_2$ die zweite Kapazität ist und $C_K$ die Kapazität eines Benutzers K ist, und die Linie definiert ist durch

$\mathbf{x} = \eta\rho = \eta[\rho_1, \rho_2,..., \rho_k]^T$, wobei $\rho_k$ ein Verhältnis der Übertragungskapazität des Kommunikationskanals ist, der dem Benutzer K zugewiesen ist; und

einen Bestimmer (424), der konfiguriert ist zum Auswählen eines einzigen Unterkanals in jedem Unterträgerblock und zum Zuweisen jedes der ausgewählten Unterkanäle dem jeweiligen Benutzer, der dem ausgewählten Unterkanal entspricht, und wenn die Zuweisung nicht mit der ersten und der zweiten Anzahl von Unterträgern n Einklang ist, Modifizieren der Zuweisung, um mit der ersten und der zweiten Anzahl von Unterträgern übereinzustimmen.

2. Unterkanalzuweisungsvorrichtung (400) gemäß Anspruch 1, bei der die Unterträgerblöcke jeweils einen einzigen Unterträger umfassen.

3. Unterkanalzuweisungsvorrichtung (400) gemäß einem der Ansprüche 1 oder 2, bei der der Selektor (402) zum Auswählen des größten singulären Werts für den ersten Benutzer (414) in jedem Unterträgerblock und zum Auswählen des größten singulären Werts für den zweiten Benutzer (418) in jedem Unterträgerblock konfiguriert ist.

4. Unterkanalzuweisungsvorrichtung (400) gemäß einem der Ansprüche 1 bis 3, bei der der Spektralzuweiser (410) zum Bilden eines ersten Ratenvektors ($R_1$) aus der ersten Kapazität, zum Bilden eines zweiten Ratenvektors ($R_2$) aus der zweiten Kapazität und zum Bilden eines Verhältnisvektors $\rho$ aus dem ersten und dem zweiten Verhältnis konfiguriert ist, wobei der Spektralzuweiser (410) ferner zum Bestimmen des ersten und des zweiten Spektralabschnitts (420, 422) durch ein Lösen einer Gleichung, die den ersten und den zweiten Ratenvektor ($R_1, R_2$) und den Verhältnisvektor $\rho$ aufweist, konfiguriert ist.

5. Unterkanalzuweisungsvorrichtung (400) gemäß Anspruch 4, bei der der Spektralzuweiser (410) zum Gewichten des ersten Ratenvektors mit dem ersten Spektralabschnitt (420) und zum Gewichten des zweiten Ratenvektors ($R_2$) mit dem zweiten Spektralabschnitt (422) konfiguriert ist, um die Gleichung zu bilden, wobei der Spektralzuweiser (410) bei, Lösen der Gleichung ferner zum Betrachten einer zusätzlichen Begrenzung eine Summe des ersten und des zweiten Spektralabschnitts (420, 422) betreffend konfiguriert ist.

6. Unterkanalzuweisungsvorrichtung (400) gemäß einem der Ansprüche 4 bis 5, bezogen auf Anspruch 2, bei der der Bestimmer (424) zum Bestimmen einer ersten Anzahl von Unterträgern, die für eine Übertragung an den ersten Benutzer (414) verwendet werden sollen, durch ein Multiplizieren des ersten Spektralabschnitts (420; $\alpha_1$) mit der Anzahl von Unterträgern (C) des Kommunikationskanals und zum Bestimmen einer zweiten Anzahl von Unterträgern, die für eine Übertragung an den zweiten Benutzer (418) verwendet werden sollen, durch ein Multiplizieren des zweiten Spektralabschnitts (422; $\alpha_2$) mit einer Anzahl von Unterträgern (C) des Kommunikationskanals konfiguriert ist.

7. Unterkanalzuweisungsvorrichtung (400) gemäß Anspruch 6, bei der der Bestimmer (424) konfiguriert ist zum Runden der ersten Anzahl von Unterträgern $\gamma_k$, um eine erste gerundete Anzahl ($\hat{\gamma}_k$) von Unterträgern zu erhalten, und Runden der zweiten Anzahl von Unterträgern ($\gamma_k$) um eine zweite gerundete Anzahl ($\hat{\gamma}_k$) von Unterträgern zu erhalten, wobei der Bestimmer (424) ferner zum Summieren der ersten und der zweiten gerundeten Anzahl von Unterträgern $(\hat{\gamma}_k)$ und zum Subtrahieren der sich ergebenden Summe von der Anzahl von Unterträgern (C) des Kommunikationskanals konfiguriert ist, um eine Signalisierungsvariable (m) zu erhalten.

8. Unterkanalzuweisungsvorrichtung (400) gemäß Anspruch 7, bei der der Bestimmer (424) konfiguriert ist zum Erhöhen der gerundeten Anzahl von Unterträgern des Benutzers mit der geringsten Differenz zwischen der jeweiligen gerundeten Anzahl von Unterträgern und der jeweiligen Anzahl von Unterträgern in dem Fall, dass die Signalisierungsvariable (m) positiv ist, oder bei der der Bestimmer (424) konfiguriert ist zum Verringern der gerundeten Anzahlen von Unterträgern $(\gamma_k)$ des Benutzers mit der größten Differenz zwischen der jeweiligen gerundeten Anzahl von Unterträgern und der jeweiligen Anzahl von Unterträgern in dem Fall, dass die Signalisierungsvariable negativ ist.

9. Unterkanalzuweisungsvorrichtung (400) gemäß einem der Ansprüche 1 bis 8, bei der der Bestimmer (424) zum Auswählen des Unterkanals mit dem höchsten singulären Wert ($\lambda$) in jedem Unterträgerblock konfiguriert ist.

10. Unterkanalzuweisungsvorrichtung (400) gemäß einem der Ansprüche 1 bis 9, bei der der Bestimmer (424) konfiguriert ist zum Bestimmen einer Anzahl von Unterkanälen, die dem ersten Benutzer zugewiesen werden sollen, und einer Anzahl von Unterkanälen, die dem zweiten Benutzer (418) zugewiesen werden sollen, wobei der Bestimmer (424) zum Verwenden der Anzahl von Unterkanälen, die den jeweiligen Benutzern zugewiesen werden sollen, und der gerundeten Anzahl eines Unterträgers $(\hat{\gamma}_k)$ der jeweiligen Benutzer konfiguriert ist, um zu bestimmen, ob eine Neuzuweisung von Unterkanälen an Benutzer durchgeführt werden soll.

11. Unterkanalzuweisungsvorrichtung (400) gemäß Anspruch 10, bei der der Bestimmer (424) konfiguriert ist zum Bestimmen eines ersten Satzes von Benutzern, denen Unterkanäle zugewiesen werden sollen, eines zweiten Satzes von Benutzern, von denen Unterkanäle entfernt werden sollen, eines Satzes von Unterträgerblöcken, an dem einem Benutzer des zweiten Satzes von Benutzern ein Unterkanal zugewiesen ist, und eines Satzes von Differenzwerten zwischen dem singulären Wert der Unterkanäle, die den Benutzern in dem ersten Satz von Benutzern zugewiesen sind, und singulären Werten von Unterkanälen in Unterträgerblöcken des Satzes von Unterträgerblöcken, die durch den Selektor (402) nicht ausgewählt sind, und wobei der Bestimmer (424) bezüglich eines verschiedenen Unterkanals an einem verschiedenen Unterträgerblock, der einem Benutzer des zweiten Satzes von Benutzern zugewiesen ist, konfiguriert ist zum Bestimmen des kleinsten Differenzwerts für den verschiedenen Unterkanal aus dem Satz von Differenzwerten, Identifizieren des Unterträgerblocks und des Benutzers, die dem bestimmten kleinsten Differenzwert mit dem verschiedenen Unterkanal entsprechen, Zuweisen des identifizierten Unterkanalblocks dem identifizierten Benutzer, derart, dass der Unterkanal des identifizierten Unterträgerblocks für eine Übertragung an den identifizierten Benutzer zugewiesen ist, und Aktualisieren des Satzes von Unterträgerblöcken.

12. Unterkanalzuweisungsvorrichtung (400) gemäß Anspruch 11, bei der der Bestimmer (424) zum iterativen Zuweisen eines Unterträgerblocks des Satzes von Unterträgerblöcken einem Benutzer des ersten Satzes von Benutzern konfiguriert ist, und bei der in einem nachfolgenden Iterationsschritt der aktualisierte Satz von Unterträgerblöcken eines vorhergehenden Iterationsschritts verwendet wird.

13. Unterkanalzuweisungsvorrichtung (400) gemäß einem der Ansprüche 1 bis 12, die einen Speicher zum Speichern von Unterkanälen aufweist, die nicht für eine Übertragung an den ersten oder zweiten Benutzer zugewiesen werden, wobei die Unterkanalzuweisungsvorrichtung konfiguriert ist zum iterativen Zuweisen von Unterkanälen, die in dem Speicher gespeichert sind, an Benutzer, und wobei die Unterkanalzuweisungsvorrichtung (400) ferner konfiguriert ist zum Löschen der Unterkanäle, die für eine Übertragung an einen Benutzer zugewiesen sind, aus dem Speicher.

14. Unterkanalzuweisungsvorrichtung (400) gemäß einem der Ansprüche 1 bis 13, wobei die Unterkanalzuweisungsvorrichtung (400) eine Unterkanalneuzuweisungseinheit (450) aufweist, wobei die Unterkanalneuzuweisungseinheit (450) ein Unterträgerzuweisungsschema zum Zuweisen einer ersten Gruppe von Unterträgerblöcken (456) eines Kommunikationskanals dem ersten Benutzer (460; 414) und zum Zuweisen einer zweiten Gruppe von Unterträgerblöcken (462) des Kommunikationskanals dem zweiten Benutzer (466; 418) aufweist, wobei der erste Benutzer (460) eine erste minimale Übertragungsrate (458) aufweist und der zweite Benutzer (466) eine zweite minimale Übertragungsrate (464) aufweist, wobei die Unterkanalzuweisungsvorrichtung (400) ferner folgende Merkmale aufweist:

einen Klassifizierer (452), der konfiguriert ist zum Ableiten einer Indikationsvariable $(\nu_k)$ für den zweiten Benutzer (466) aus einem Optimierungsproblem, wobei das Optimierungsproblem darauf gerichtet ist, die Übertragungskapazität durch den Kommunikationskanal hindurch zu maximieren, und auf der ersten und der zweiten minimalen Übertragungsrate basiert, wobei die Indikationsvariable ($v_k$) einen ersten Wertebereich aufweist, der angibt, dass, falls ein Wert der Indikationsvariable ($v_k$) in dem ersten Wertebereich liegt, eine Erhöhung der Übertragungsrate des zweiten Benutzers wirksam ist zum Verringern der Übertragungskapazität durch den Kommunikationskanal hindurch, und die Indikationsvariable ($v_k$) einen zweiten Wertebereich aufweist, der angibt, dass, falls ein Wert der Indikationsvariable in dem zweiten Wertebereich liegt, eine Erhöhung der Übertragungsrate des zweiten Benutzers wirksam ist zum Erhöhen oder Konstanthalten der Übertragungskapazität des Kommunikationskanals, wobei der Klassifizierer (452) konfiguriert ist zum Klassifizieren des zweiten Benutzers (466) in eine erste Klassifikationsgruppe (Gruppe L), falls die Indikationsvariable in dem ersten Wertebereich liegt, oder zum Klassifizieren des zweiten Benutzers (466) in eine zweite Klassifikationsgruppe (Gruppe W), falls die Indikationsvariable in dem zweiten Wertebereich liegt; und

einen Zuweiser (454), der konfiguriert ist zum Verringern der Anzahl von Unterträgerblöcken der zweiten Gruppe von Unterträgerblöcken (462) und zum Erhöhen der Anzahl von Unterträgerblöcken der ersten Gruppe von Unterträgerblöcken (456) in dem Fall, dass der zweite Benutzer (466) in die erste Klassifikationsgruppe (Gruppe L) klassifiziert ist.

15. Unterkanalzuweisungsvorrichtung (400) gemäß Anspruch 14, die ferner einen Verhältnisbereitsteller aufweist, der konfiguriert ist zum Liefern eines Übertragungsratenverhältnisses der zweiten minimalen Übertragungsrate (464) und der ersten minimalen Übertragungsrate (458), und wobei der Klassifizierer (452) konfiguriert ist zum Ableiten der Indikationsvariable von dem Optimierungsproblem, wobei das Optimierungsproblem auf dem Übertragungsratenverhältnis basiert, wobei die Indikationsvariable angibt, dass, falls ein Wert der Indikationsvariable in dem ersten Wertebereich liegt, eine Erhöhung des Übertragungsratenverhältnisses wirksam ist zum Verringern der Übertragungskapazität des Kommunikationskanals, und wobei die Indikationsvariable angibt, dass, falls ein Wert der Indikationsvariable in dem zweiten Wertebereich liegt, eine Erhöhung des Übertragungsratenverhältnisses wirksam ist zum Erhöhen oder Konstanthalten der Übertragungskapazität des Kommunikationskanals.

16. Unterkanalzuweisungsvorrichtung (400) gemäß Anspruch 14 oder 15, bei der der Klassifizierer (452) konfiguriert ist zum Verwenden einer Übertragungsrate des ersten Benutzers und eines Übertragungsratenverhältniswerts für den ersten und den zweiten Benutzer, um den ersten Benutzer in die erste oder zweite Klassifikationsgruppe zu klassifizieren, und bei der der Zuweiser (454) konfiguriert ist zum Verringern der Anzahl von Unterträgerblöcken der ersten Gruppe von Unterträgerblöcken (456) und zum Erhöhen der Anzahl von Unterträgerblöcken der zweiten Gruppe von Unterträgerblöcken (462) in dem Fall, dass der erste Benutzer in die erste Klassifikationsgruppe klassifiziert ist.

17. Unterkanalzuweisungsvorrichtung (400) gemäß einem der Ansprüche 14 bis 16, bei der der Zuweiser (454) zumindest zum Zuweisen einer Anzahl von Unterträgerblöcken dem zweiten Benutzer konfiguriert ist, derart, dass der zweite Benutzer die zweite minimale Übertragungsrate erhält.

18. Unterkanalzuweisungsvorrichtung (400) gemäß einem der Ansprüche 14 bis 17, die einen Leistungszuweiser aufweist, der erstens zum Zuweisen von Leistung an die Unterträgerblöcke der zweiten Gruppe von Unterträgerblöcken (462), um dem zweiten Benutzer (466) die zweite minimale Übertragungsrate zu liefern, und zweitens zum Zuweisen von Leistung an den Unterträger der ersten Gruppe von Unterträgerblöcken, um die Summenübertragungskapazität an den Unterträgerblöcken der ersten Gruppe von Unterträgerblöcken zu maximieren, konfiguriert ist.

19. Unterkanalzuweisungsvorrichtung (400) gemäß einem der Ansprüche 14 bis 18, bei der der Klassifizierer (452) zum Berechnen eines Lagrange-Optimierungsproblems konfiguriert ist.

20. Unterkanalzuweisungsvorrichtung (400) gemäß einem der Ansprüche 15 bis 19, bei der der Zuweiser (454) konfiguriert ist zum Bestimmen einer Rate für den zweiten Benutzer (466) und einer Rate für den ersten Benutzer (460) basierend auf der Anzahl von Unterträgerblöcken, die dem ersten beziehungsweise dem zweiten Benutzer (406, 466) durch den Zuweiser (454) zugewiesen sind, wobei der Zuweiser (454) konfiguriert ist zum iterativen Liefern der bestimmten Rate für den ersten und den zweiten Benutzer (406, 466) an den Verhältnisbereitsteller, wobei der Verhältnisbereitsteller konfiguriert ist zum Liefern eines Übertragungsratenverhältnisses auf der Basis der Rate für den ersten und den zweiten Benutzer (460, 466), die durch den Zuweiser (454) geliefert wird.

21. Unterkanalzuweisungsvorrichtung (400) gemäß Anspruch 20, wobei der erste Benutzer (460) eine maximale Übertragungsrate aufweist, wobei der Klassifizierer (452) konfiguriert ist zum Klassifizieren des ersten Benutzers in die erste Klassifikationsgruppe (Gruppe L), falls dem ersten Benutzer (460) eine Anzahl von Unterträgerblöcken zugewiesen ist, die dazu führt, dass eine Übertragungsrate für den ersten Benutzer (460) höher als die maximale Übertragungsrate ist.

22. Unterkanalzuweisungsverfahren zum Zuweisen von Unterkanälen eines Kommunikationskanals für eine Übertragung in einem Mehrträger-Mehreingang-Mehrausgang-Sender an einen ersten Benutzer (414) von K Benutzern, wobei K ≥ 2, und an einen zweiten Benutzer (418) konfiguriert ist, wobei ein Unterträgerblock einen oder mehrere Unterträger und zumindest einen Unterkanal für den ersten Benutzer (414), wobei sich ein Unterkanal auf einen Einzeleingang-Einzelausgang-Kanal eines zerlegten Mehreingang-Mehrausgang-Kommunikationskanals bezieht, und einen Unterkanal für den zweiten Benutzer (418) aufweist, wobei jedem Unterkanal ein singulärer Wert basierend auf einer Kanalmatrix des Kommunikationskanals zugewiesen ist, wobei dem ersten Benutzer (414) anfänglich ein erstes Verhältnis (412) $\rho_1$ der Übertragungskapazität des Kommunikationskanals zugewiesen ist und dem zweiten Benutzer (418) anfänglich ein zweites Verhältnis (416) $\rho_2$ der Übertragungskapazität des Kommunikationskanals zugewiesen ist, wobei das Unterkanalzuweisungsverfahren folgende Schritte aufweist:

Auswählen eines oder mehrerer singulärer Werte für den ersten Benutzer (414) und eines oder mehrerer singulärer Werte für den zweiten Benutzer (418) an jedem Unterträgerblock;
Bestimmen einer ersten Kapazität, die der erste Benutzer (414) in dem Kommunikationskanal unter Verwendung aller Unterträger des Unterträger des Unterträgerblocks und unter Verwendung des einen oder der mehreren ausgewählten singulären Werte für den ersten Benutzer (406) erreichen kann, und Bestimmen einer zweiten Kapazität, die der zweite Benutzer (418) in dem Kommunikationskanal unter Verwendung aller Unterträger des Unterträgerblocks und unter Verwendung des einen oder der mehreren ausgewählten singulären Werte für den zweiten Benutzer (418) erreichen kann,
Auswerten eines Schnittpunkts einer Ebene **y,** die durch Tupel von Raten definiert ist, die der ersten und der zweiten Kapazität entsprechen, und einer Geraden **x,** die durch das erste (412) $\rho_1$ und zweite (416) $\rho_2$ Verhältnis definiert ist, die gegebene QoS-Beschränkungen sind, um einen ersten Spektralabschnitt (420) des Spektrums hinsichtlich einer ersten Anzahl von Unterträgern des Kommunikationskanals, die für eine Übertragung an den ersten Benutzer (414) verwendet werden sollen, und einen zweiten Spektralabschnitt (422) hinsichtlich einer zweiten Anzahl von Unterträgern des Kommunikationskanals, die für eine Übertragung an den zweiten Benutzer (418) verwendet werden sollen, zu bestimmen, wobei die Ebene **y** durch die folgenden Tupel von Raten definiert ist

$$R_1 = [C_1 \quad 0 \quad \dots \quad 0]^T$$

$$R_2 = [0 \quad C_2 \quad \dots \quad 0]^T$$

$$.$$
$$.$$
$$.$$

$$R_K = [0 \quad 0 \quad \dots \quad C_K]^T,$$

$$\mathbf{y} = \alpha_1 \mathbf{R}_1 + \alpha_2 \mathbf{R}_2 + \dots + \alpha_K \mathbf{R}_K \text{ , mit}$$

$$\alpha_1 + \alpha_2 + \dots + \alpha_K = 1$$

wobei $C_1$ die erste Kapazität ist, $C_2$ die zweite Kapazität ist und $C_K$ die Kapazität eines Benutzers K ist, und die Linie definiert ist durch
**x** $= \eta\rho = \eta[\rho_1 \ \rho_2, .., \rho_K]^T$, wobei $\rho_K$ ein Verhältnis der Übertragungskapazität des Kommunikationskanals ist, der dem Benutzer K zugewiesen ist; und
Auswählen eines einzigen Unterkanals in jedem Unterträgerblock und Zuweisen jedes der ausgewählten Unterkanäle dem jeweiligen Benutzer, der dem ausgewählten Unterkanal entspricht, und wenn die Zuweisung nicht mit der ersten und der zweiten Anzahl von Unterträgern n Einklang ist, Modifizieren der Zuweisung, um mit der ersten und der zweiten Anzahl von Unterträgern übereinzustimmen.

23. Computerprogramm, das einen Programmcode zum Durchführen des Verfahrens gemäß Anspruch 22 aufweist, wenn das Computerprogramm auf einem Computer abläuft.

**Revendications**

1. Dispositif pour l'attribution de sous-canaux (400) configuré pour attribuer des sous-canaux d'un canal de communication pour la transmission dans un émetteur à entrées multiples et sorties multiples à porteuses multiples vers un premier utilisateur (414) parmi K utilisateurs, où $K \geq 2$, et vers un deuxième utilisateur (418), un bloc de sous-porteuses présentant une ou plusieurs sous-porteuses et au moins un sous-canal pour le premier utilisateur (414), un sous-canal se référant à un canal à une seule entrée et une seule sortie d'un canal de communication à entrées multiples et sorties multiples décomposé, et un sous-canal pour le deuxième utilisateur (418), chaque sous-canal ayant, y associée, une valeur singulière sur base d'une matrice de canaux du canal de communication, au premier utilisateur (414) étant initialement attribué un premier rapport (412) $\rho_1$ de la capacité de transmission du canal de communication et au deuxième utilisateur (418) étant initialement attribué un deuxième rapport (416) $\rho_2$ de la capacité de transmission du canal de communication, le dispositif pour l'attribution de sous-canaux (400) comprenant:

   un sélecteur (402) configuré pour sélectionner sur chaque bloc de sous-porteuses une ou plusieurs valeurs singulières pour le premier utilisateur (414) et une ou plusieurs valeurs singulières pour le deuxième utilisateur (418);
   un attributeur spectral (410) configuré pour déterminer une première capacité que le premier utilisateur (414) peut atteindre dans le canal de communication à l'aide de toutes les sous-porteuses du bloc de sous-porteuses et à l'aide de l'une ou plusieurs valeurs singulières sélectionnées pour le premier utilisateur (406) et pour déterminer une deuxième capacité que le deuxième utilisateur (418) peut atteindre dans le canal de communication à l'aide de toutes les sous-porteuses du bloc de sous-porteuses et à l'aide de l'une ou plusieurs valeurs singulières sélectionnées pour le deuxième utilisateur (408), où l'attributeur spectral (410) est par ailleurs configuré pour évaluer un point d'intersection entre un plan **y** défini par des uplets de débits correspondant aux première et deuxième capacités et une ligne droite **x** définie par les premier (412) $\rho_1$ et deuxième (416) rapports $\rho_2$ qui sont soumis à QoS contraintes, pour déterminer une première partie spectrale (420) du spectre en termes d'un premier nombre de sous-porteuses du canal de communication à utiliser pour la transmission au premier utilisateur (414) et une deuxième partie spectrale (422) en termes d'un deuxième nombre de sous-porteuses du canal de communication à utiliser pour la transmission au deuxième utilisateur (418), où le plan **y** est défini par les uplets de débits suivants

$$R_1 = [C_1 \ 0 \ ... \ 0]^T$$
$$R_2 = [0 \ C_2 \ ... \ 0)^T$$
$$.$$
$$.$$
$$.$$
$$R_K = [0 \ 0 \ ... \ C_K)^T,$$
$$\mathbf{y} = \alpha_1\mathbf{R_1} + \alpha_2\mathbf{R_2} + ... + \alpha_K\mathbf{R_K}, \text{ avec}$$
$$\alpha_1 + \alpha_2 + ... + \alpha_K = 1$$

   où $C_1$ est la première capacité, $C_2$ est la deuxième capacité et $C_K$ est la capacité d'un utilisateur K, et la ligne est définie par
   $x = \eta\rho = \eta[\rho_1, \rho_2, ..., \rho k)^T$, où $\rho_K$ est un rapport de capacité de transmission du canal de communication attribué à l'utilisateur K; et
   un déterminateur (424) configuré pour sélectionner un seul sous-canal dans chaque bloc de sous-porteuses et pour attribuer chacun des sous-canaux sélectionnés à l'utilisateur respectif auquel correspond le sous-canal sélectionné et, lorsque l'attribution n'est pas en accord avec les premier et deuxième nombres de sous-porteuses, pour modifier l'attribution de manière à correspondre aux premier et deuxième nombres de sous-porteuses.

2. Dispositif pour l'attribution de sous-canaux (400) selon la revendication 1, dans lequel le bloc de sous-porteuses se compose, chacun, d'une seule sous-porteuse.

3. Dispositif pour l'attribution de sous-canaux (400) selon l'une des revendications 1 ou 2, dans lequel le sélecteur (402) est configuré pour sélectionner la valeur singulière la plus grande pour le premier utilisateur (414) dans chaque bloc de sous-porteuses et pour sélectionner la valeur singulière la plus grande pour le deuxième utilisateur (418) dans chaque bloc de sous-porteuses.

4. Dispositif pour l'attribution de sous-canaux (400) selon l'une des revendications 1 à 3, dans lequel l'attributeur spectral (410) est configuré pour former un premier vecteur de débit ($R_1$) à partir de la première capacité, pour former un deuxième vecteur de débit ($R_2$) à partir de la deuxième capacité et pour former un vecteur de rapport (p) à partir des premier et deuxième rapports, dans lequel l'attributeur spectral (410) est par ailleurs configuré pour déterminer les première et deuxième parties spectrales (420, 422) en résolvant une équation comprenant les premier et deuxième vecteurs de débit ($R_1$, $R_2$) et le vecteur de rapport ($\rho$).

5. Dispositif pour l'attribution de sous-canaux (400) selon la revendication 4, dans lequel l'attributeur spectral (410) est configuré pour pondérer le premier vecteur de débit par la première partie spectrale (420) et pour pondérer le deuxième vecteur de débit ($R_2$) par la deuxième partie spectrale (422), pour former ladite équation, dans lequel l'attributeur spectral (410) est par ailleurs configuré pour considérer une contrainte additionnelle en ce qui concerne une somme de la première et de la deuxième partie spectrale (420, 422) lors de la résolution de ladite équation.

6. Dispositif pour l'attribution de sous-canaux (400) selon l'une des revendications 4 à 5, avec référence à la revendication 2, dans lequel le déterminateur (424) est configuré pour déterminer un premier nombre de sous-porteuses à utiliser pour la transmission au premier utilisateur (414) en multipliant la première partie spectrale (420; $\alpha_1$) par le nombre de sous-porteuses (C) du canal de communication et pour déterminer un deuxième nombre de sous-porteuses à utiliser pour la transmission au deuxième utilisateur (418) en multipliant la deuxième partie spectrale (422; $\alpha_2$) par un nombre de sous-porteuses (C) du canal de communication.

7. Dispositif pour l'attribution de sous-canaux (400) selon la revendication 6, dans lequel le déterminateur (424) est configuré pour arrondir le premier nombre de sous-porteuses ($\gamma_k$), pour obtenir un premier nombre arrondi ($\hat{\gamma}_k$) de sous-porteuses et pour arrondir le deuxième nombre de sous-porteuses ($\hat{\gamma}_k$), pour obtenir un deuxième nombre arrondi de sous-porteuses ($\hat{\gamma}_k$), dans lequel le déterminateur (424) est par ailleurs configuré pour additionner les premier et deuxième nombres arrondis de sous-porteuses ($\hat{\gamma}_k$) et pour soustraire la somme résultante du nombre de sous-porteuses (C) du canal de communication, pour obtenir une variable de signalisation (m).

8. Dispositif pour l'attribution de sous-canaux (400) selon la revendication 7, dans lequel le déterminateur (424) est configuré pour augmenter le nombre arrondi de sous-porteuses de l'utilisateur présentant la différence la plus petite entre le nombre arrondi respectif de sous-porteuses et le nombre respectif de sous-porteuses au cas où la variable de signalisation (m) est positive ou dans lequel le déterminateur (424) est configuré pour réduire les nombres arrondis de sous-porteuses ($\hat{\gamma}_k$) de l'utilisateur présentant la différence la plus grande entre le nombre arrondi respectif de sous-porteuses et le nombre respectif de sous-porteuses au cas où la variable de signalisation est négative.

9. Dispositif pour l'attribution de sous-canaux (400) selon l'une des revendications 1 à 8, dans lequel le déterminateur (424) est configuré pour sélectionner dans chaque bloc de sous-porteuses le sous-canal ayant la valeur singulière la plus élevée ($\lambda$).

10. Dispositif pour l'attribution de sous-canaux (400) selon l'une des revendications 1 à 9, dans lequel le déterminateur (424) est configuré pour déterminer un nombre de sous-canaux à attribuer au premier utilisateur et un nombre de sous-canaux à attribuer au deuxième utilisateur (418), dans lequel le déterminateur (424) est configuré pour le nombre de sous-canaux à attribuer aux utilisateurs respectifs et le nombre arrondi d'une sous-porteuse ($\hat{\gamma}_k$) des utilisateurs respectifs, pour déterminer s'il y a lieu d'effectuer une réattribution de sous-canaux aux utilisateurs.

11. Dispositif pour l'attribution de sous-canaux (400) selon la revendication 10, dans lequel le déterminateur (424) est configuré pour déterminer un premier ensemble d'utilisateurs auxquels doivent être attribués des sous-canaux, un deuxième ensemble d'utilisateurs desquels doivent être éliminés des sous-canaux, un ensemble de blocs de sous-porteuses sur lequel il est attribué un sous-canal à un utilisateur du deuxième ensemble d'utilisateurs et un ensemble de valeurs de différence entre la valeur singulière des sous-canaux attribués aux utilisateurs dans le premier ensemble d'utilisateurs et les valeurs singulières des sous-canaux dans les blocs de sous-porteuses de l'ensemble de blocs de sous-porteuses qui ne sont pas sélectionnés par le sélecteur (402), et dans lequel le déterminateur (424) est configuré pour déterminer, en ce qui concerne un sous-canal distinct sur un bloc de sous-porteuses distinct attribué à un utilisateur du deuxième ensemble d'utilisateurs, la valeur de différence la plus petite pour le sous-canal distinct parmi l'ensemble de valeurs de différence, identifier le bloc de sous-porteuses et l'utilisateur correspondant à la valeur de différence la plus petite déterminée avec le sous-canal distinct, attribué le bloc de sous-canaux identifié à l'utilisateur identifié, de sorte que le sous-canal du bloc de sous-porteuses identifié soit attribué pour la transmission à l'utilisateur identifié, et mettre à jour l'ensemble de blocs de sous-porteuses.

**12.** Dispositif pour l'attribution de sous-canaux (400) selon la revendication 11, dans lequel le déterminateur (424) est configuré pour attribuer de manière itérative un bloc de sous-porteuses de l'ensemble de blocs de sous-porteuses à un utilisateur du premier ensemble d'utilisateurs, et dans lequel est utilisé, dans une étape d'itération successive, l'ensemble mis à jour de blocs de sous-porteuses d'une étape d'itération précédente.

**13.** Dispositif pour l'attribution de sous-canaux (400) selon l'une des revendications 1 à 12, comprenant une mémoire destinée à la mémorisation des sous-canaux non attribués pour une transmission au premier ou au deuxième utilisateur, dans lequel le dispositif pour l'attribution de sous-canaux est configuré pour attribuer de manière itérative les sous-canaux mémorisés dans la mémoire aux utilisateurs, et dans lequel le dispositif pour l'attribution de sous-canaux (400) est par ailleurs configuré pour effacer les sous-canaux attribués pour la transmission à un utilisateur à partir de ladite mémoire.

**14.** Dispositif pour l'attribution de sous-canaux (400) selon l'une des revendications 1 à 13, le dispositif pour l'attribution de sous-canaux (400) présentant une unité de réattribution de sous-canaux (450), l'unité de réattribution de sous-canal (450) présentant un schéma d'attribution de sous-porteuses destiné à attribuer un premier groupe de blocs de sous-porteuses (456) d'un canal de communication au premier utilisateur (460; 414) et à attribuer un deuxième groupe de blocs de sous-porteuses (462) du canal de communication au deuxième utilisateur (466; 418), le premier utilisateur (460) ayant un premier débit de transmission minimum (458) et le deuxième utilisateur (466) ayant un deuxième débit de transmission minimum (464), le dispositif pour l'attribution de sous-canaux (400) comprenant par ailleurs:

un classificateur (452) configuré pour dériver une variable d'indication ($v_k$) pour le deuxième utilisateur (466) d'un problème d'optimisation, le problème d'optimisation visant à maximiser la capacité de transmission dans le canal de communication et étant basé sur le premier et le deuxième débit de transmission minimum, la variable d'indication ($v_k$) présentant une première plage de valeurs indiquant que, si une valeur de la variable d'indication ($v_k$) se trouve dans la première plage de valeurs, une augmentation du débit de transmission du deuxième utilisateur est opérationnelle pour diminuer la capacité de transmission dans le canal de communication et la variable d'indication ($v_k$) présentant une deuxième plage de valeurs indiquant que, si une valeur de la variable d'indication se trouve dans la deuxième plage de valeurs, une augmentation du débit de transmission du deuxième utilisateur est opérationnelle pour augmenter ou maintenir constante la capacité de transmission du canal de communication, où le classificateur (452) est configuré pour classifier le deuxième utilisateur (466) dans un premier group de classification (groupe L) si la variable d'indication se situe dans la première plage de valeurs, ou pour classifier le deuxième utilisateur (466) dans un deuxième group de classification (groupe W) si la variable d'indication se situe dans la deuxième plage de valeurs; et
un attributeur (454) configuré pour réduire le nombre de blocs de sous-porteuses du deuxième groupe de blocs de sous-porteuses (462) et pour augmenter le nombre de blocs de sous-porteuses du premier groupe de blocs de sous-porteuses (456) au cas où le deuxième utilisateur (466) est classifié dans le premier groupe de classification (groupe L).

**15.** Dispositif pour l'attribution de sous-canaux (400) selon la revendication 14, comprenant par ailleurs un fournisseur de rapport configuré pour fournir un rapport de débit de transmission entre le deuxième débit de transmission minimum (464) et le premier débit de transmission minimum (458), et dans lequel le classificateur (452) est configuré pour dériver la variable d'indication du problème d'optimisation, le problème d'optimisation étant basé sur le rapport de débit de transmission, dans lequel la variable d'indication est indicative du fait que, si une valeur de la variable d'indication se situe dans la première plage de valeurs, une augmentation du rapport de débit de transmission est opérationnelle pour diminuer la capacité de transmission du canal de communication, et dans lequel la variable d'indication est indicative du fait que, si une valeur de la variable d'indication se situe dans la deuxième plage de valeurs, une augmentation du rapport de débit de transmission est opérationnelle pour augmenter ou maintenir constante la capacité de transmission du canal de communication.

**16.** Dispositif pour l'attribution de sous-canaux (400) selon les revendications 14 ou 15, dans lequel le classificateur (452) est configuré pour utiliser un débit de transmission du premier utilisateur et une valeur de rapport de débit de transmission pour le premier et le deuxième utilisateur, pour classifier le premier utilisateur dans le premier ou le deuxième groupe de classification, et dans lequel l'attributeur (454) est configuré pour réduire le nombre de blocs de sous-porteuses du premier groupe de blocs de sous-porteuses (456) et pour augmenter le nombre de blocs de sous-porteuses du deuxième groupe de blocs de sous-porteuses (462) au cas où le premier utilisateur est classifié dans le premier groupe de classification.

17. Dispositif pour l'attribution de sous-canaux (400) selon l'une des revendications 14 à 16, dans lequel l'attributeur (454) est configuré pour attribuer au moins un nombre de blocs de sous-porteuses au deuxième utilisateur de sorte que le deuxième utilisateur obtienne le deuxième débit de transmission minimum.

18. Dispositif pour l'attribution de sous-canaux (400) selon l'une des revendications 14 à 17, comprenant un attributeur d'énergie configuré pour attribuer en premier lieu de l'énergie aux blocs de sous-porteuses du deuxième groupe de blocs de sous-porteuses (462), pour fournir le deuxième débit de transmission minimum au deuxième utilisateur (466) et pour attribuer en deuxième lieu de l'énergie à la sous-porteuse du premier groupe de blocs de sous-porteuses, pour maximiser la capacité de transmission de somme sur les blocs de sous-porteuses du premier groupe de blocs de sous-porteuses.

19. Dispositif pour l'attribution de sous-canaux (400) selon l'une des revendications 14 à 18, dans lequel le classificateur (452) est configuré pour calculer un problème d'optimisation de Lagrange.

20. Dispositif pour l'attribution de sous-canaux (400) selon l'une des revendications 14 à 19, dans lequel l'attributeur (454) est configuré pour déterminer un débit pour le deuxième utilisateur (466) et un débit pour le premier utilisateur (460) sur base du nombre de blocs de sous-porteuses attribués aux premier et deuxième utilisateurs (406, 466) respectivement par l'attributeur (454), dans lequel l'attributeur (454) est configuré pour fournir de manière itérative ledit débit déterminé pour le premier et le deuxième utilisateur (406, 466) au fournisseur de rapport, et dans lequel le fournisseur de rapport est configuré pour fournir un rapport de débit de transmission sur base du débit pour le premier et le deuxième utilisateur (460, 466) fourni par l'attributeur (454).

21. Dispositif pour l'attribution de sous-canaux (400) selon la revendication 20, le premier utilisateur (460) ayant un débit de transmission maximum, dans lequel le classificateur (452) est configuré pour classifier le premier utilisateur dans le premier groupe de classification (groupe L) s'il est attribué au premier utilisateur (460) un nombre de blocs de sous-porteuses résultant en un débit de transmission pour le premier utilisateur (460) supérieur au débit de transmission maximum.

22. Procédé d'attribution de sous-canaux pour attribuer des sous-canaux d'un canal de communication pour la transmission dans un émetteur à entrées multiples et sorties multiples à porteuses multiples vers un premier utilisateur (414) parmi K utilisateurs, où K ≥ 2, et vers un deuxième utilisateur (418), un bloc de sous-porteuses présentant une ou plusieurs sous-porteuses et au moins un sous-canal pour le premier utilisateur (414), un sous-canal se référant à un canal à une seule entrée et une seule sortie d'un canal de communication à entrées multiples et sorties multiples décomposé, et un sous-canal pour le deuxième utilisateur (418), chaque sous-canal ayant, y associée, une valeur singulière sur base d'une matrice de canaux du canal de communication, au premier utilisateur (414) étant initialement attribué un premier rapport (412) $\rho_1$ de la capacité de transmission du canal de communication et au deuxième utilisateur (418) étant initialement attribué un deuxième rapport (416) $\rho_2$ de la capacité de transmission du canal de communication, le procédé d'attribution de sous-canaux comprenant les étapes consistant à:

sélectionner sur chaque bloc de sous-porteuses une ou plusieurs valeurs singulières pour le premier utilisateur (414) et une ou plusieurs valeurs singulières pour le deuxième utilisateur (418);
déterminer une première capacité que le premier utilisateur (414) peut atteindre dans le canal de communication à l'aide de toutes les sous-porteuses du bloc de sous-porteuses et à l'aide de l'une ou plusieurs valeurs singulières sélectionnées pour le premier utilisateur (406) et pour déterminer une deuxième capacité que le deuxième utilisateur (418) peut atteindre dans le canal de communication à l'aide de toutes les sous-porteuses du bloc de sous-porteuses et à l'aide de l'une ou plusieurs valeurs singulières sélectionnées pour le deuxième utilisateur (408),
évaluer un point d'intersection entre un plan **y** défini par des uplets de débits correspondant aux première et deuxième capacités et une ligne droite **x** définie par les premier (412) $\rho_1$ et deuxième (416) rapports $\rho_2$ qui sont soumis à QoS contraintes, pour déterminer une première partie spectrale (420) en termes d'un premier nombre de sous-porteuses du canal de communication à utiliser pour la transmission au premier utilisateur (414) et une deuxième partie spectrale (422) en termes d'un deuxième nombre de sous-porteuses du canal de communication à utiliser pour la transmission au deuxième utilisateur (418), où le plan **y** est défini par les uplets de débits suivants

$$R_1 = [C_1 \ 0 \ \ldots \ 0]^T$$
$$R_2 = [0 \ C_2 \ \ldots \ 0)^T$$
.
.
.
$$R_K = [0 \ 0 \ \ldots \ C_K)^T,$$
$$\mathbf{y} = \alpha_1 \mathbf{R}_1 + \alpha_2 \mathbf{R}_2 + \ldots + \alpha_K \mathbf{R}_K, \ avec$$
$$\alpha_1 + \alpha_2 + \ldots + \alpha_K = 1$$

où $C_1$ est la première capacité, $C_2$ est la deuxième capacité et $C_K$ est la capacité d'un utilisateur K, et la ligne est définie par

$x = \eta\rho = \eta[\rho_1, \rho_2, \ldots, \rho_K)^T$, où $\rho_K$ est un rapport de capacité de transmission du canal de communication attribué à l'utilisateur K; et

sélectionner un seul sous-canal dans chaque bloc de sous-porteuses et attribuer chacun des sous-canaux sélectionnés à l'utilisateur respectif auquel correspond le sous-canal sélectionné et, lorsque l'attribution n'est pas en accord avec les premier et deuxième nombres de sous-porteuses, modifier l'attribution de manière à correspondre aux premier et deuxième nombres de sous-porteuses.

23. Programme d'ordinateur présentant un code de programme pour réaliser le procédé selon la revendication 22 lorsque le programme d'ordinateur est exécuté sur un ordinateur.

# FIG 1

initialization: $\quad\quad\quad\quad j = 1, \quad T_{n,1} = I_t$

repeat:

1. $H^j_{n,k} = H_{n,k} T_{n,j} \ \forall k \ \forall n$

2. $H^j_{n,k} = U^j_{n,k} \Lambda^j_{n,k} V^{j,\mathrm{H}}_{n,k} \ \forall k \ \forall n$

3. $(k_0, s_0) = \mathcal{O}\{\lambda^j_{n,k,s}\}\,,\ \pi_n(j) = (k_0, \ell(k_0))$

$\quad\quad v_{\pi_n(j)} = V^j_{n,k_0} e_{s_0},\ u_{\pi_n(j)} = U^j_{n,k_0} e_{s_0}$

4. $T_{n,j+1} = T_{n,j} - v_{\pi_n(j)} v^{\mathrm{H}}_{\pi_n(j)},\ j = j + 1$

until $\quad j > \displaystyle\sum_k r_k \ \text{or}\ T_{n,j} = 0$

**FIG 2**

balanced channels

- Capacity Region
- Sato Bound
- CZF-SESAM (max λ)

$R_2$ (bits/subcarrier)

$R_1$ (bits/subcarrier)

unbalanced channels

- Capacity Region
- Sato Bound
- CZF-SESAM (max λ)

$R_2$ (bits/subcarrier)

$R_1$ (bits/subcarrier)

FIG 3

balanced channels

unbalanced channels

EP 1 863 248 B1

# FIG 4A

400

**user 1** (424) — 426 → individual subchannels being allocated to the 1. user

412 — first ratio

402 **selector**

406 one or more signal values for 1. user

408 one or more signal values for 2. user

410 **spectral allocator**

412 first ratio

420 1. spectral portion

422 2. spectral portion

**determiner** (424)

404 **singular values of subcarrier blocks of the communication channel**

425

416 second ratio

418 **user 2**

428 → individual subchannels being allocated to the 2. user

EP 1 863 248 B1

# FIG 4B

460 ─ (≙414)

user 1

increase number of subcarrier blocks
of the first group of subcarrier blocks

1. group
of subcarrier
blocks

1. minimum
transmission
rate

450 ↘

456 ─

─ 458

454

452 ─

classifier
optimization problem

user 2 classified info
first classification group

allocator

user 2 classified info
second classification group

2. group
of subcarrier
blocks

2. minimum
transmission
rate

462 ─

─ 464

466 ─ (≙418)

user 2

reduce number of subcarrier blocks
of the second group of subcarrier blocks

EP 1 863 248 B1

# FIG 5

balanced channels

unbalanced channels

EP 1 863 248 B1

**FIG 6**

balanced channels

Capacity Region
Sato Bound
+ CZF-SESAM (max λ)
⊕ CZF-SESAM (max λμ)
* CZF-SESAM with LFA

$R_2$ (bits/subcarrier)

$R_1$ (bits/subcarrier)

balanced channels

Capacity Region
Sato Bound
+ CZF-SESAM (max λ)
⊕ CZF-SESAM (max λμ)
* CZF-SESAM with LFA

$R_2$ (bits/subcarrier)

$R_1$ (bits/subcarrier)

FIG 7

## FIG 8

uncorrelated channels

correlated channels

EP 1 863 248 B1

# FIG 9

# FIG 10A

1000

**Start**

**Initial relative rate requirements** 1020

$$q_k^{(1)} = \frac{R_{k,min}}{R_{ref\,user,min}}$$

**User Classification** 1030

Run CZF-SESAM with req. $q_k^{(n)}$

$\Rightarrow$ Lagrange multipliers $\nu_k$

$\nu_k < 0 \Rightarrow$ Group L

$\nu_k \geq 0 \Rightarrow$ Group W

1070

**User classification changed?** — no

yes

**Adjustment of requirements**

$$q_k^{(n)} = \frac{R_k^{(n-1)}}{R_{ref\,user}^{(n-1)}}$$

1060

**Subchannel Allocation** 1040

• Reduce number of subcarriers in Group L by factor $\dfrac{R_{k,min}}{R_k^{(1)}}$

• Distribute spare subcarriers to Group W

**Power Allocation** 1050

• Satisfy $R_{k,min}$ in Group L

• Maximize sum capacity in Group W with requirements $q_k^{(n)}$

**Stop**

FIG 10B

## FIG 11

## FIG 12

FIG 13

# FIG 14

balanced channels

unbalanced channels

EP 1 863 248 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006048037 A

### Non-patent literature cited in the description

- **S. VISHWANATH ; N. JINDAL ; A. J. GOLDSMITH.** Duality, Achievable Rates, and Sum-Rate Capacity of Gaussian MIMO Bradcast Channel. *IEEE Trans. on Information Theory,* October 2003, vol. 49, 2658-2668
- **QIAN WANG et al.** A grouped and proportional-fair subcarrier allocation scheme for multiuser OFDM systems. *25th IEEE International Performance, Computing and Communications Conference,* 10 April 2006, ISBN 1-4244-0198-4, 97-101
- **WONG I.C. et al.** A low Complexity Algorithm for Proportional Resource Allocation in OFDMA Systems. *Signal Processing Systems, 2004, SIPS 2004, IEEE Workshop in Austin,* 13 October 2004, ISBN 0-7803-8504-7, 1-6
- **JIAN XU et al.** Adaptive resource allocation algorithm with fairness for MIMO-OFDMA system. *VTC 2006-SPRING, 2006 IEEE 63RD Vehicular Technology Conference,* 2006, ISBN 0-7803-9391-0, 1585-1589
- **YIN, H. et al.** An Efficient Multiuser Loading Algorithm for OFDM-Based Broadband Wireless Systems. *GLOBECOM'00. 2000 IEEE Global Telecommunications Conference,* 27 November 2000, vol. 1, ISBN 0-7803-6452-X, 103-107
- **RHEE W. et al.** Increase in Capacity of Multiuser OFDM System Using Dynamic Subchannel Allocation. *VTC 2000-SPRING. 2000 IEEE 51st. Vehicular Technology Conference Proceedings,* 15 May 2000, vol. 2, 3, ISBN 0-7803-5719-1, 1085-1089
- **L. A. ZADEH.** Optimality and Non-Scalar-Valued Performance Criteria. *IEEE Transactions on Automatic Control, AC,* 1963, vol. 8 (1), 59-60
- **D. PEREZ PALOMAR ; J. RODRIGUEZ FONOLLOSA.** Practical Algorithms for a Family of Waterfilling Solutions. *IEEE Transactions on Signal Processing,* 2005, vol. 53, 686-695
- **J. BREHMER ; A. MOLIN ; P. TEJERA ; W. UTSCHICK.** Low Complexity Approximation of the MIMO Broadcast Channel Capacity Region. *ICC'06,* 2006
- **HARISH VISWANATHAN ; SIVARAMA VENKATESA ; HOWARD HUANG.** Downlink Capacity Evaluationof Cellular Networks with known-Interference Cancellation. *IEEE Journal on Selected areas in Communicatios,* 2003, vol. 21, 802-811
- **PEDRO TEJERA ; WOLFGANG UTSCHICK ; GERHARD BAUCH ; JOSEF NOSSEK.** Practical Aspects of Successive Encoding Schemes for the MIMO OFDM Braudcast Channel. *Proceedings of ICC,* 2006
- **S. BOYD ; L. VANDENBERGHE.** Convex Optimization. Cambridge University Press, 2004
- **DANIEL PEREZ PALOMAR ; MIGUEL ANGEL LAGUNAS ; JOHN M. CIOFFI.** Optimum Linear Joint Transmit-Receive Processing for MIMO Channels with QoS Contraints. *IEEE Transactions on Signal Processing,* 2004, vol. 52, 1179-1197